# EUROPÄISCHE PATENTSCHRIFT

(11) **EP 4 283 353 B1**
(45) Veröffentlichungstag und Bekanntmachung des Hinweises auf die Patenterteilung: **26.11.2025**
(21) Anmeldenummer: 23174536.5
(22) Anmeldetag: 22.05.2023
(51) Int. Cl.: G02B 6/04

(54) **AUFNAHME FÜR EIN LICHTLEITERBÜNDEL, VERFAHREN UND ZWISCHENPRODUKT ZU DESSEN HERSTELLUNG**
RECEPTACLE FOR A LIGHT GUIDE BUNDLE, METHOD AND INTERMEDIATE PRODUCT FOR THE PRODUCTION THEREOF
LOGEMENT POUR UN FAISCEAU DE FIBRES OPTIQUES, PROCÉDÉ ET PRODUIT INTERMÉDIAIRE POUR SA FABRICATION

(30) Priorität: 24.05.2022 DE 102022113107
(43) Veröffentlichungstag der Anmeldung: 29.11.2023
(73) Patentinhaber: SCHOTT AG, 55122 Mainz (DE)
(72) Erfinder: RUSSERT, Hubertus, 55270 Jugenheim (DE); WALTER, Lukas, 65375 Oestrich-Winkel (DE)
(74) Vertreter: Schott Corporate IP

(56) Entgegenhaltungen:
- EP-A2- 0 707 836
- US-A1- 2014 241 693

## Beschreibung

Die Erfindung betrifft allgemein die Herstellung von Lichtleitern. Insbesondere betrifft die Erfindung die Terminierung von Lichtleitern.

Typischerweise werden Lichtleiter mit einer Terminierung versehen, welche die Anordnung und Befestigung des Lichtleiters zur Ein- oder Auskopplung von Licht erleichtert. Eine Möglichkeit dazu besteht darin, eine Endhülse oder Ferrule vorzusehen, in welche der Lichtleiter eingefügt und darin fixiert ist. Aus der DE 102017 104 398 A1 ist beispielsweise eine Ferrule zum Abschluss eines Lichtleiters bekannt, welche zwei miteinander verbundene Kunststoffteile umfasst, wobei ein Teil transparent ist und einen Kanal aufweist, in welchem der oder die lichtleitenden Fasern des Lichtleiters aufgenommen werden. Die Fasern geben ihr Licht dann durch das Kunststoffteil hindurch ab, oder nehmen Licht auf, welches durch das Kunststoffteil hindurch auf die Faserenden trifft.

Aus der WO 2015/169685 Al ist ein Lichtleiter mit einem angeformten optischen Element bekannt. Der Lichtleiter kann als starrer Lichtleiter in Form eines Faserstabs oder Lichtleitstabs oder als flexibler Lichtleiter ausgeführt sein, deren Lichtein- und /oder Austrittsflächen verklebt oder heißverschmolzen sind. Der Bereich des Lichtleiters, der aus Glas besteht, endet in einer Stirnfläche aus Glas. An diese Stirnfläche aus Glas ist ein optisches Element aus zumindest einem transparenten Kunststoff angeformt, so dass die im Betriebszustand in dem Lichtleiter geleitete elektromagnetischer Strahlung durch die Stirnfläche aus Glas in den transparenten Kunststoff des optischen Elements geleitet wird und wieder aus diesem austritt.

Die Terminierung eines Lichtleiters kann auch mit einem Signalwandler kombiniert werden, um die Lichtsignale zu empfangen oder zu erzeugen. So sieht die EP 2 600 181 A1 ein Verfahren zum Koppeln eines Glasfaserbündels mit einem optischen Konversionselement vor, wobei das Glasfaserbündel von einer Seite in eine Hülse eingeführt wird, das optische Konversionselement von einer anderen Seite eingeführt wird und die Hülse mit einer aushärtbaren transparentem Vergussmasse (14) gefüllt wird, so dass das optische Konversionselement und das Glasfaserbündel in der Vergussmasse eingebettet sind.

Aus der DE 103 92 977 T5 ist ein optischer Verbinder bekannt, bei dem eine Mehrzahl von Einführungslöchern zum Einführen von optischen Fasern in festgelegten Abständen angeordnet sind. Dabei liegt die Genauigkeit des Mittenabstandes zwischen den benachbarten Einführungslöchern im Bereich von ±0,5 µm und die Parallelität der benachbarten Einführungslöcher in Längsrichtung im Bereich von ±0,1°.

Die US 2014/241693 A1 beschreibt eine monolithische Vorrichtung zur Aufnahme mehrerer Lichtleiter. Diese umfasst im Allgemeinen mehrere Kern-Mantel-Lichtwellenleitern mit großem Durchmesser und einen Körper mit einer Vielzahl von Bohrungen, in denen die Lichtwellenleiter angeordnet sind. Mindestens ein Teil der Ummantelung jedes der Lichtwellenleiter ist mit dem Körper verschmolzen und die Vorrichtung ist so eine monolithische Struktur.

Je nach Anwendung kann es wünschenswert sein, die einzelnen Fasern eines Lichtleiters präzise zu positionieren und die Abmessungen des terminierten Lichtleiters am Ende möglichst klein zu halten, so dass beispielsweise keine erhebliche Verdickung des Lichtleiters entsteht. Eine mögliche Anwendung hierfür sind etwa Lichtleiter für Endoskope. Auch andere Anwendungen sind hier von Interesse, wie etwa Anordnungen von Fasern für spektroskopische Anwendungen. Klassische Lösungen, wie dünnwandige koaxiale Röhrchen lösen das Problem, wenn überhaupt nur begrenzt. Ein weiteres Problem besteht in der Handhabung der entsprechend kleinen Bauteile. Weiterhin kann auch der Einsatz zu vieler verschiedener Werkstoffe unerwünscht sein. Daher kann es auch von Vorteil sein, wenn die Terminierung die gleichen oder zumindest entsprechende Materialien umfasst, wie auch die lichtleitenden Fasern. Unter anderem kann dies günstig sein, um möglichst ähnliche Temperaturausdehnungskoeffizienten von Fasern und Endhülse zu haben.

Diese vorgenannten Aufgaben können durch den Gegenstand der unabhängigen Ansprüche gelöst werden. Vorteilhafte Ausgestaltungen der Erfindung sind in den jeweiligen abhängigen Ansprüchen angegeben.

Demgemäß sieht die Erfindung eine Aufnahme für eine Mehrzahl von lichtleitenden Fasern eines Lichtleiters mit zwei gegenüberliegenden Stirnflächen vor, wobei die Aufnahme aus einem Glas gefertigt ist und mehrere geradlinige Kanäle aufweist. Die Kanäle erstrecken sich in Richtung von einer Stirnfläche der Aufnahme hin zur anderen Stirnfläche. Die Richtung dieser Kanäle kann dabei parallel entlang der Längsrichtung der Aufnahme, oder auch schräg zur Längsrichtung liegen. Vorzugsweise verlaufen die Kanäle dabei auch parallel zueinander. Die Kanäle sind jeweils an zumindest einem der Enden geöffnet, so dass eine lichtleitende Faser in den Kanal einführbar ist. Die Kanäle weisen eine Länge auf, die größer als deren Querabmessung, insbesondere bei rundem Querschnitt deren Durchmesser ist. Ebenso weist die Aufnahme eine Länge, gegeben durch den Abstand der Stirnflächen auf, die größer ist als deren größte Querabmessung. Auf der Mantelfläche der Aufnahme ist eine vorzugsweise langgestreckte Trennfläche vorhanden beziehungsweise verläuft auf dieser, diese Trennfläche ist mindestens teil- oder abschnittweise in Gestalt einer Bruchfläche ausgebildet. Bei einer langgestreckten Trennfläche verläuft diese insbesondere in Längsrichtung der Aufnahme. Die Aufnahme oder Endhülse ermöglicht es auf diese Weise, die einzelnen Fasern eines Lichtleiters einzeln in den Kanälen festzulegen und definiert anzuordnen. Die Trennfläche entsteht durch Ablösen der Aufnahme von einem größeren Glasteil. Damit lässt sich die Aufnahme auch bei sehr kleinen Dimensionen gut handhaben. In bevorzugter Ausgestaltung wird die Aufnahme einfach durch Abbrechen von einem größeren Glasteil abgelöst. In diesem Fall wird als Trennfläche eine Bruchfläche erhalten. In einer bevorzugten Ausführungsform ist nur eine einzelne Trennfläche vorhanden, entsprechend einer einzelnen Verbindung zu einem größeren Glasteil bei der Fertigung. Es können aber auch zwei und mehr solcher Trennflächen vorhanden sein, etwa, wenn eine stabilere Verbindung zum größeren Glasteil bei der Fertigung gegeben sein soll. Es ist dann aber günstig, nicht zu viele Verbindungen, beziehungsweise Trennflächen vorzusehen. Es ist daher besonders bevorzugt, wenn nicht mehr als zehn Trennflächen, insbesondere nicht mehr als fünf Trennflächen vorhanden sind.

Die bevorzugte Herstellung einer solchen Aufnahme oder Endhülse erfolgt über ein lasergestütztes Verfahren, bei dem mit einem Ultrakurzpulslaser Schädigungen eingefügt und das so vorbehandelte Substrat einem Ätzprozess unterzogen wird, wodurch die Schädigungsbereiche vergrößert werden, so dass das Substrat an den eingefügten Schädigungen schließlich durchtrennt wird. Entsprechende Verfahren sind aus der DE 10 2018 100 299 A1, der PCT/CN2019/086830 oder der EP 3 936 485 A1 prinzipiell bekannt. Eine Vorrichtung zur Laserbearbeitung mittels eines Ultrakurzpulslasers, mit der auch fein strukturierte Konturlinien abgefahren werden können, ist weiterhin aus der DE 10 2017 100 755 A1 bekannt.

Im Speziellen ist ein Verfahren zur Herstellung einer Aufnahme gemäß dieser Offenbarung vorgesehen, mit den Schritten:
- Bereitstellen einer Glasplatte,
- Bestrahlen der Glasplatte mit einem Ultrakurzpulslaser, wobei der Laserstrahl des Ultrakurzpulslasers im Glas fokussiert wird und dort lokale Schädigungen hinterlässt, wobei
- der Laserstrahl des Ultrakurzpulslasers über die Glasplatte entlang eines vorgegebenen Pfades bewegt wird, so dass entlang dieses Pfades aufgereihte, nebeneinanderliegende lokale Schädigungen eingefügt werden, und wobei anschließend
- die Glasplatte einem Ätzmedium ausgesetzt wird, so dass
- die lokalen Schädigungen durch das Ätzmedium aufgeweitet wird und die Glasplatte dadurch entlang des Pfades aufgetrennt wird, wobei der Pfad so verläuft, dass dieser die Kontur einer Aufnahme, die über einen Steg mit einem Halteabschnitt verbunden ist, enthält, und wobei durch das Ätzen und Auftrennen ein Abschnitt der Glasplatte abgelöst wird, so dass ein Glaselement mit dem Halteabschnitt und der mit diesem über den Steg verbundenen Aufnahme erhalten wird, und wobei
- die Aufnahme durch Auftrennen des Stegs vom Halteabschnitt gelöst wird.

Die Aufnahme wird demnach so aus der Glasplatte herausgearbeitet, dass Abschnitte der Seitenflächen der Glasplatte die Stirnflächen der Aufnahme bilden. Nach dem Bearbeiten der Glasplatte und dem Ablösen des Abschnitts der Glasplatte wird dementsprechend ein Zwischenprodukt zur Herstellung einer Aufnahme gemäß dieser Offenbarung erhalten, wobei das Zwischenprodukt die Form einer Glasplatte mit gegenüberliegenden parallelen Seitenflächen hat, wobei sich das Zwischenprodukts in einen Halteabschnitt und eine über einen Steg mit dem Halteabschnitt verbundene Aufnahme gemäß dieser Offenbarung untergliedert, wobei die Stirnflächen der Aufnahme durch Abschnitte der Seitenflächen gebildet werden, beziehungsweise, wobei die Stirnflächen in den Seitenflächen des Zwischenprodukts liegen. Die Kanäle in der Aufnahme erstrecken sich dann folglich quer zu den Seitenflächen des Zwischenprodukts, also in Richtung von einer der Seitenflächen hin zur anderen Seitenfläche. Dieses Zwischenprodukt gestattet durch den Verbund der Aufnahme mit dem Halteabschnitt in besonders vorteilhafter Weise eine einfache Handhabung des kleinen Bauteils. Insbesondere gilt für das Herstellungsverfahren und das Zwischenprodukt auch, dass mehrere Aufnahmen parallel gefertigt werden und mit dem Halteabschnitt verbunden sein können. In bevorzugter Ausgestaltung ist daher vorgesehen, dass im Zwischenprodukt eine Mehrzahl von Aufnahmen vorhanden sind und jeweils mit einem Steg mit dem Halteabschnitt verbunden sind.

Wie oben beschrieben, wird die Glasplatte gemäß einer bevorzugten Ausführungsform mittels eines Verfahrens strukturiert, welches das lasergestützte Einfügen von lokalen Schädigungen und das nachfolgende Aufätzen dieser Schädigungen umfasst. Es sind aber auch andere Verfahren, auch andere lasergestützte Verfahren, wie beispielsweise die Laserablation denkbar. Allgemeiner ist gemäß dieser Offenbarung daher auch ein Verfahren zur Herstellung vorgesehen, bei welchem eine Aufnahme hergestellt wird, indem eine Glasplatte bereitgestellt und diese dann so unter Entfernung von Teilen der Glasplatte strukturiert wird, dass ein wie oben beschriebenes Zwischenprodukt erhalten wird.

Der zuvor genannte Werkstoff Glas bzw. die zuvor genannte Glasplatte ist üblicherweise ein Kalk-Natron- oder Borosilikat-Glas. Denkbar sind auch andere Spezialgläser, sofern es auf besondere chemische und/ oder optische Anforderung ankommt. Ferner sei angemerkt, dass hier auch der Werkstoff Quarzglas oder Glaskeramik, z.B. eine Alumo-Silikat-Glaskeramik, unter dem Begriff Glas bzw. Glasplatte als Spezialfall verstanden wird.

Die Erfindung wird nachfolgend genauer anhand der Figuren näher erläutert.

### Kurzbeschreibung der Figuren

Fig. 1 zeigt in perspektivischer Ansicht einen Lichtleiter, der mit einer Aufnahme terminiert ist.
Fig. 2 zeigt jeweils in Aufsicht auf eine Stirnfläche der Aufnahme mehrere beispielhafte Anordnungen von Kanälen in der Aufnahme.
Fig. 3 zeigt eine Aufnahme mit nicht durchgehenden Kanälen.
Fig. 4 zeigt eine Aufnahme mit schräg verlaufenden Kanälen.
Fig. 5 zeigt eine Aufnahme mit verbundenem Steg in Aufsicht auf eine Stirnfläche.
Fig. 6 zeigt eine Variante der in Fig. 5 dargestellten Ausführungsform.
Fig. 7 zeigt Verfahrensschritte zur Herstellung eines Zwischenprodukts für eine Aufnahme.
Fig. 8 zeigt eine Anordnung zum Einfügen lokaler Schädigungen in eine Glasplatte mittels eines Ultrakurzpulslaser.
Fig. 9 und Fig. 10 zeigen lichtmikroskopische Aufnahmen eines Zwischenprodukts für die Herstellung von Aufnahmen.
Fig. 11 zeigt eine Variante der in Fig. 1 gezeigten Ausführungsform.
Fig. 12 zeigt ein lichtmikroskopisches Bild einer Aufnahme in Seitenansicht.
Fig. 13 zeigt lichtmikroskopische Bilder mit einem Zwischenprodukt in Aufsicht auf die Stirnflächen der Aufnahmen.
Fig. 14 zeigt ein Zwischenprodukt in perspektivischer Ansicht.
Fig. 15 zeigt eine strukturierte Glasplatte in einer Schnittansicht.
Fig. 16 zeigt eine mit dem Ultrakurzpulslaser bearbeitete Glasplatte in einer Schnittansicht.

### Detaillierte Beschreibung der Figuren

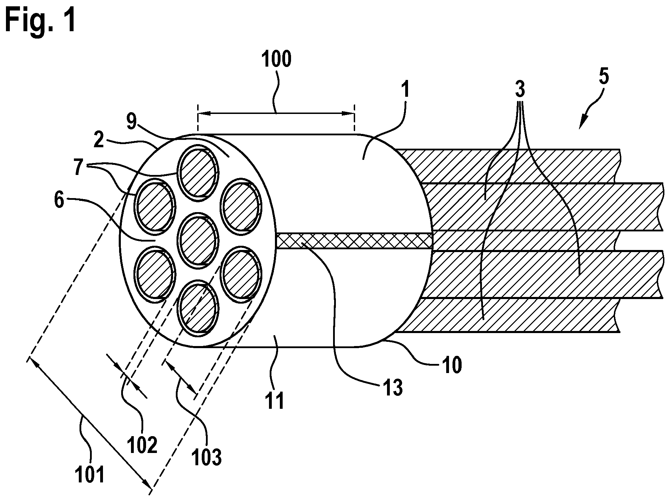

Fig. 1 zeigt einen Lichtleiter 5, der mit einer Aufnahme 1 gemäß dieser Offenbarung terminiert ist. Die Aufnahme 1 umfasst ein Glasteil 2, beziehungsweise ist aus einem Glas gefertigt. Vorzugsweise hat die Aufnahme 1 eine zylindrische oder allgemeiner prismatische Form mit zwei Stirnflächen 9, 10. Die Stirnflächen 9, 10 sind weiterhin bevorzugt parallel zueinander orientiert. Die Aufnahme weist mehrere vorzugsweise geradlinige Kanäle 7 auf, die sich in Längsrichtung, also in Richtung von Stirnfläche 9 zu Stirnfläche 10 erstrecken. Damit die lichtleitenden Fasern 3 eines Lichtleiters 5 in die Aufnahme 1 eingeführt werden können, sind die Kanäle 7 zu mindestens einer Stirnfläche 9, 10 hin geöffnet. Im dargestellten Beispiel sind die Kanäle 7 beidseitig geöffnet. Die Enden der lichtleitenden Fasern 3 liegen daher hier offen, wobei aber auch beispielsweise ein Verguss mit einem transparenten Material vorgesehen werden kann, so dass das Licht durch das transparente Material hindurch transmittiert wird. Die Kanäle 7 haben eine langgezogene Form, so dass deren Länge, welche hier auch der Länge 100 der Aufnahme 1 entspricht, größer ist als deren Querabmessung 103.

Auf der Mantelfläche 11 der Aufnahme 1 befindet sich eine langgestreckte Trennfläche 13, die ebenso wie die Kanäle 7 in Längsrichtung der Aufnahme 1 verläuft. Diese Trennfläche 13 entsteht beim Abtrennen der Aufnahme 1 von einem Zwischenprodukt, bei welchem die Aufnahme in einen Steg übergeht, der mit einem Halteabschnitt verbunden ist. Vorzugsweise wird die Aufnahme 1 vom Zwischenprodukt einfach abgebrochen, so dass die Trennfläche 13 die Gestalt, beziehungsweise charakteristische Topographie einer Bruchfläche hat.

Auch die Aufnahme 1 selbst weist vorzugsweise eine langgestreckte Form auf, so dass deren Länge 100 größer als deren größte Querabmessung 101 ist. Die Querabmessung 101 der Aufnahme 1 liegt vorzugsweise im Bereich von 100 µm bis 5mm. Vorzugsweise, insbesondere bei einer Ausführungsform, bei der wie im dargestellten Beispiel neben den Kanälen für die lichtleitenden Fasern keine weiteren Strukturen vorhanden sind, bei höchstens 0,4 mm. In einem Beispiel weist die Aufnahme 1 eine zylindrische Form mit einem Durchmesser von 170 µm auf.

Die Länge 100 der Aufnahme 1 liegt allgemein gemäß einer weiteren Ausführungsform in einem Bereich von 0,5 mm bis 5 mm, vorzugsweise im Bereich von 1 mm bis 2 mm.

Der Bereich zwischen zwei benachbarten Kanälen 7 kann als Wandung 6 verstanden werden. Ein Kennzeichen der Aufnahme 1 gemäß dieser Offenbarung ist, dass die Wandstärke 102 der Wandung 6 zwischen den Kanälen 7 sehr dünn gehalten werden kann. Dies gilt insbesondere für das Verhältnis der Wandstärke 102 zur Länge 100 der Aufnahme 1. Die die minimale Wandstärke zwischen zwei benachbarten Kanälen 7 beträgt gemäß einer allgemeinen Ausführungsform 5 µm bis bis 1 mm, vorzugsweise liegt die minimale Wandstärke im Bereich von 10 µm bis 100 µm, die Stegbreiten können zwischen den Kanälen bzw. zwischen den Kanälen zum Rand unterschiedlich sein. Das Verhältnis von Länge 100 der Aufnahme 1 zu minimaler Wandstärke zwischen zwei benachbarten Kanälen 7 kann gemäß noch einer alternativen oder zusätzlichen Ausführungsform mindestens 50:1 betragen. Diese Abmessungen und Verhältnisse müssen generell nicht für alle Kanäle 7 gelten, da die Kanäle 7 auch mit unterschiedlichen Abmessungen und/oder Abständen zueinander verlaufen können.

Die Abmessungen der Kanäle 7 richten sich auch nach den Abmessungen der lichtleitenden Fasern 3, die darin aufgenommen werden sollen. So liegt die Querabmessung 103 eines Kanals 7 gemäß einer weiteren alternativen oder zusätzlichen Ausführungsform im Bereich von 10 µm bis 2 mm. In einem Beispiel werden für lichtleitende Fasern 3 eines Lichtleiters 5 mit einem Durchmesser von 50 µm Kanäle 7 vorgesehen, die einen Durchmesser, beziehungsweise allgemeiner eine Querabmessung von 55 µm haben. Die Kanäle 7 können neben einem kreisrunden Querschnitt auch andere Querschnittformen haben. So können die Kanäle eine ovale, aber auch im Wesentlichen quadratische oder allgemeiner rechteckige oder polygonale Form haben. Typischerweise sind bei eckigen Querschnittformen aber die Ecken bedingt durch den für die Herstellung bevorzugten Ätzprozess etwas verrundet.

Die im Beispiel der Fig. 1 gezeigte Aufnahme 1 hat insgesamt sieben Kanäle. Vorzugsweise liegt die Anzahl der Kanäle 7 allgemein im niedrigen zweistelligen Bereich, also bei höchstens 50. Bevorzugt liegt die Anzahl der Kanäle im Bereich von 2 bis 40, besonders bevorzugt im Bereich von 2 bis 20.

Um eine besonders kompakte Konfiguration zu erhalten, können die Kanäle 7 weiterhin eine hexagonale Anordnung einnehmen. Auch dieses Ausführungsform ist bei dem in Fig. 1 gezeigten Beispiel realisiert.

Besonders mit dem in der Einleitung genannten lasergestützten Strukturierungsverfahren können solche Strukturen mit hohem Aspektverhältnis hergestellt werden. Dies ist auch unabhängig davon, ob die Herstellung im Verbund der Aufnahme mit einer mit dieser über einen Steg verbundenen, strukturierten Glasplatte erfolgt und daher auch unabhängig davon, ob an der Aufnahme 1 eine streifenförmige Trennfläche 13 vorhanden ist, oder nicht. Allgemein, unabhängig davon, ob die Trennfläche 13 vorhanden ist, oder nicht, ist daher gemäß einer weiteren Ausführungsform allgemein eine Aufnahme 1 für eine Mehrzahl von lichtleitenden Fasern 3 eines Lichtleiters 5 mit zwei gegenüberliegenden Stirnflächen 9, 10 vorgesehen, wobei die Aufnahme 1 aus einem Glas gefertigt ist und mehrere geradlinige Kanäle 7 aufweist, wobei die Kanäle 7 sich in Richtung von einer Stirnfläche 9 der Aufnahme 1 hin zur anderen Stirnfläche 10 erstrecken, und wobei die Kanäle 7 jeweils an zumindest einem der Enden, beziehungsweise Stirnflächen 9, 10 der Aufnahme 1 geöffnet sind, so dass eine lichtleitende Faser 3 in den Kanal 7 einführbar ist, wobei die Kanäle 7 eine Länge aufweisen, die größer als deren Querabmessung ist, und die Aufnahme 1 eine Länge, gegeben durch den Abstand der Stirnflächen 9, 10 aufweist, die größer ist als deren größte Querabmessung, und wobei die Aufnahme 1 in vorteilhafter Ausbildung zumindest eines der folgenden Merkmale aufweist:
- das Verhältnis der von der Kontur einer Stirnfläche 9, 10 eingeschlossenen Fläche zur summierten Fläche der Öffnungen 70 der Kanäle 7 in der Stirnfläche 9, 10 beträgt weniger als 3,0,
- die minimale Wandstärke zwischen zwei benachbarten Kanälen 7 beträgt 10 µm bis 100 µm, vorzugsweise höchstens 20 µm,
- das Verhältnis von Länge der Aufnahme 1 zu minimaler Wandstärke zwischen zwei benachbarten Kanälen 7 beträgt mindestens 50:1,
- die Länge der Aufnahme 1 liegt im Bereich von 0,5 mm bis 2,5 mm,
- die maximale Querabmessung der Aufnahme 1, insbesondere der Durchmesser beträgt 100 µm bis 5 mm, vorzugsweise höchstens 0,4 mm.

Typischerweise ist das Glasteil 2, beziehungsweise das Glas der Aufnahme im sichtbaren Spektralbereich, also in einem Bereich der Lichtwellenlängen von etwa 750 nm bis 400 nm transparent. Gemäß einer anderen Ausführungsform ist das Glasteil 2, beziehungsweise das Glas der Aufnahme 1 zumindest in einem Teilbereich des sichtbaren Spektralbereichs von 400 nm bis 750 nm opak. Gemäß einer allgemeineren Ausführungsform kann die Opazität auch in zumindest einem Teilbereich innerhalb eines breiteren Spektralbereichs gegeben sein, der auch das nahe Infrarotlicht und UV-Licht einschließt. Gemäß dieser Ausführungsform ist das Glas in zumindest einem Teilbereich des Spektralbereichs von 1000 nm bis 350 nm opak. Eine Ausführungsform mit einem opaken Glas kann dann sehr vorteilhaft sein, wenn ein Übersprechen von Lichtsignalen zwischen den Kanälen 7 der Aufnahme 1 unterdrückt werden soll.

Auch mit dem Verfahren, bei welchem lokale Schädigungen im Glas eingefügt und später durch Ätzen aufgeweitet werden, kann gegebenenfalls ein solches opake Glas bearbeitet werden. Dies ist insbesondere dann der Fall, wenn das Glas zwar in einem spektralen Teilbereich opak, in einem anderen Teilbereich aber transparent ist. In diesem Fall kann die Laserstrahlung im transparenten Teilbereich dennoch in das Volumen des Glases eindringen und tiefreichende Schädigungen verursachen.

Gemäß einer alternativen oder zusätzlichen Ausführungsform kann auch zumindest in einem Abschnitt der Oberfläche der Aufnahme 1 einschließlich der Innenoberfläche der Kanäle 7 eine lichtundurchlässige Beschichtung aufgebracht sein. Der Begriff eines opaken Glases oder einer lichtundurchlässigen Beschichtung wird im Sinne dieser Offenbarung so verstanden, dass mindestens 90% des ansonsten von Kanal zu benachbartem Kanal transmittierten Lichts geblockt wird. Das Blocken erfolgt durch Absorption und/oder im Falle einer lichtundurchlässigen Beschichtung gegebenenfalls auch durch Reflexion.

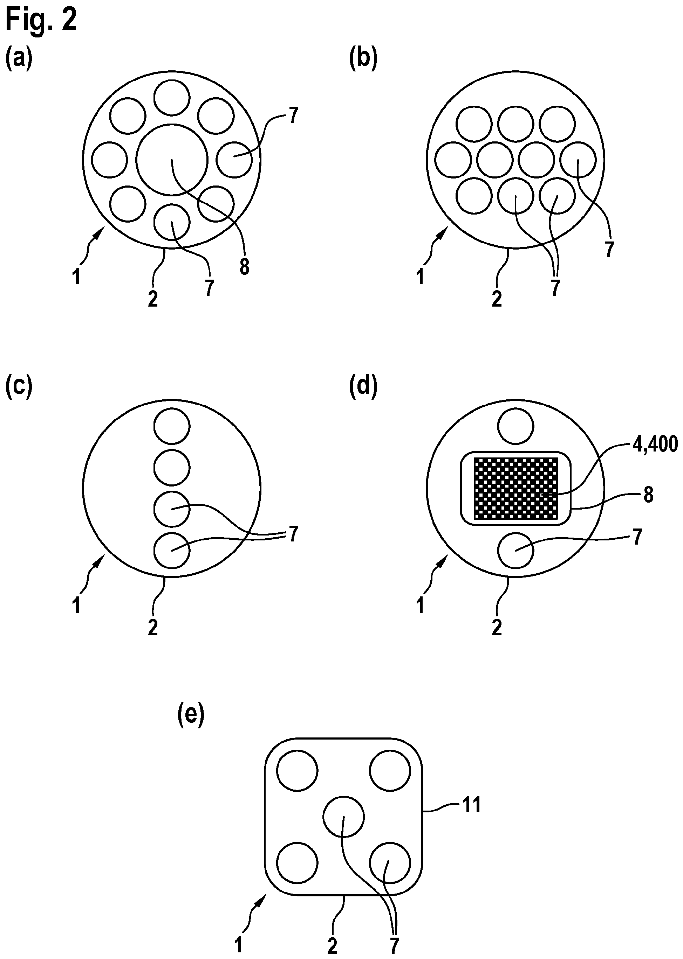

Fig. 2 zeigt in Aufsicht auf eine der Stirnflächen der Aufnahme 1 verschiedene Beispiele für weitere Anordnungen und Formen von Kanälen 7. Bei einer im Beispiel (a) realisierten Ausführungsform sind die Kanäle 7 ringförmig um einen zentralen Kanal 8 herum verteilt. Dies ist übrigens auch bei der Ausführungsform mit den sieben Kanälen gemäß Fig. 1 der Fall. Im Beispiel der Fig. 2, Teilbild (a) ist allerdings die Anordnung der Kanäle 7 ansonsten nicht hexagonal. Die Kanäle 7, 8 müssen auch nicht grundsätzlich alle die gleiche Querabmessung und/oder die gleiche Form haben. So kann es für bestimmte Anwendungen sehr vorteilhaft sein, einen Kanal, vorzugsweise wie im Beispiel (a) einen zentralen Kanal 8 vorzusehen, der eine größere Querabmessung, insbesondere einen größeren Durchmesser als die weiteren Kanäle 7 hat. Der zentrale Kanal 8 kann eine andere Funktion haben als die umgebenden Kanäle 7. So können in die umgebenen Kanäle 7 lichtleitende Fasern 3 eingeführt werden, die zur Beleuchtung dienen, wohingegen im zentralen Kanal 8 beispielsweise ein Sensor eingeführt wird, welcher Lichtsignale aufnehmen kann.

Teilbild (b) zeigt ein weiteres Ausführungsbeispiel mit einer hexagonalen Anordnung der Kanäle 7, wobei diese Aufnahme insgesamt zehn Kanäle 7 aufweist.

Bei dem in Teilbild (c) gezeigten Beispiel sind die Kanäle 7 linear in einer Reihe angeordnet. Eine solche Konfiguration kann beispielsweise für spektroskopische Anwendungen geeignet sein.

Wie schon in Bezug auf das Beispiel (a) der Fig. 2 erläutert können neben der Fixierung von lichtleitenden Fasern 3 auch andere Funktionalitäten in der Aufnahme integriert werden. Bei der in Beispiel (d) gezeigten Aufnahme ist ähnlich wie im Beispiel (a) ein zentraler Kanal 8 vorgesehen. Dieser ist speziell dazu ausgebildet, eine Kamera 4 oder zumindest einen optischen Sensor, vorzugsweise einen Kamerasensor 400 aufzunehmen. Im Beispiel ist dieser Kanal 8 dazu auch nicht rund ausgebildet, sondern weist eine rechteckige Querschnittform mit abgerundeten Ecken auf. Dieser Kanal muss anders als in Beispiel (d) gezeigt, kein zentraler Kanal 8 sein, der von weiteren Kanälen 7 umgeben ist. Selbstverständlich sind auch andere Konfigurationen, etwa mit einer Anordnung von Kanälen 7 für die lichtleitenden Fasern 3 und dem Kanal für die Kamera 4 in nebeneinanderliegenden Feldern möglich. Gemäß einer Weiterbildung ist also allgemein, ohne Beschränkung auf das dargestellte Beispiel vorgesehen, dass die Aufnahme 1 zuzüglich zu zumindest einem Kanal 7 zur Aufnahme einer lichtleitenden Faser 3 einen Kanal zur Aufnahme einer Kamera 4 oder eines optischen Sensors, wie etwa eines Kamerasensors 400 aufweist. Die Größe eines Kamerasensors beträgt typischerweise 0,5 x 0,5 mm bis 1,5 x 1,5 mm. Dies ist entsprechend dann auch der bevorzugte Bereich der Querabmessung des für den Kamerasensor vorgesehenen Kanals 7, 8. Eine solche Konfiguration, wie sie Beispiel (d) zeigt, ist besonders geeignet für die Spitze eines Endoskops. Dabei wird Licht zur Beleuchtung des zu untersuchenden Objekts über die in den Kanälen 7 aufgenommenen lichtleitenden Fasern 3 abgestrahlt und das so beleuchtete Objekt mit der Kamera 4 oder dem optischen Sensor, wie vorzugsweise einen Kamerasensor 400 aufgenommen. Allgemein, ohne Beschränkung auf das spezielle Beispiel ist daher in einer Ausführungsform ein Endoskop vorgesehen, welches einen Lichtleiter 30 zur Beleuchtung umfasst, wobei das Ende des Endoskops eine Aufnahme 1 gemäß dieser Offenbarung aufweist. Es ist neben der Ausführungsform mit der Kamera 4 oder dem Kamerasensor 400 dabei auch denkbar, dass die Bildinformation ebenfalls optisch, beispielsweise über lichtleitende Fasern übertragen wird. So könnte in dem zentralen Kanal 8 auch ein Bildleiter angeordnet werden.

Bei den bisher in den Figuren dargestellten Ausführungsbeispielen hat die Aufnahme 1 eine im Wesentlichen zylindrische Grundform. Wie bereits gesagt sind aber auch andere Formen möglich und mit dem hier beschriebenen Herstellungsverfahren auch in einfacher Weise zu fertigen. Hierzu zeigt Teilbild (e) eine Ausführungsform mit einer Mantelfläche mit abgerundet quadratischer Kontur.

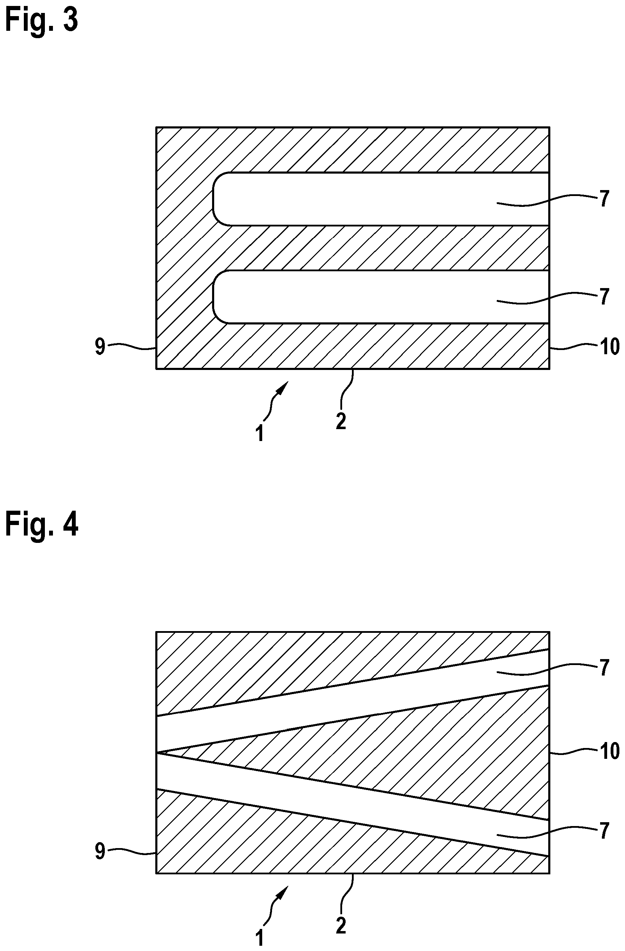

In Fig. 3 ist eine Aufnahme 1 in Querschnittansicht dargestellt, bei der die Kanäle 7 nicht durchgehen. Demgemäß sind die Kanäle 7 nur zu einer Stirnfläche 10 des Glasteils 2, beziehungsweise der Aufnahme 1 hin geöffnet. In der Darstellung sind alle sichtbaren Kanäle nicht durchgehend, beziehungsweise als Sacklöcher ausgebildet. Es besteht aber auch die Möglichkeit, einen oder mehrere der Kanäle 7 durchgehend und einen oder mehrere Kanäle 7 nicht durchgehend auszubilden. Demgemäß ist in einer Ausführungsform der Aufnahme allgemein vorgesehen, dass zumindest einer der Kanäle 7 als Sackloch ausgebildet ist. Ein Vorteil dieser Anordnung ist, dass die lichtleitende Faser 3 in das Sackloch eingeklebt werden kann und kein Schleifen und Polieren der Endflächen erforderlich ist. Dies kann eine Kostenersparnis mit sich bringen. Zudem wird eine Stirnfläche erhalten, die gegenüber einer Ausführungsform mit in durchgehenden Kanälen eingeklebten Fasern keine polymeren Bestandteile aufweist, sondern insbesondere eine durchgehende Glasfläche darstellt.

Im Beispiel der Fig. 3 verlaufen die Kanäle 7 weiterhin parallel zur Längsrichtung der Aufnahme. Es ist aber auch möglich, dass zumindest einer der Kanäle 7 schräg zur Längsrichtung oder Längsachse der Aufnahme 1 verläuft. Bei dem dargestellten Beispiel der Fig. 4 verlaufen beide in der Schnittansicht sichtbaren Kanäle 7 schräg zur Längsachse. Weiterhin verlaufen diese auch schräg zueinander, im Speziellen in Richtung von einer Stirnfläche 10 zur anderen Stirnfläche 9 aufeinander zu. Dementsprechend können die Kanäle 7 unabhängig vom speziellen dargestellten Beispiel allgemein auch so angeordnet sein, dass sich deren gegenseitiger Abstand entlang der Längsrichtung verändert. Schräg verlaufende Kanäle 7 lassen sich mit dem oben beschriebenen lasergestützten Verfahren leicht erreichen, indem der Laserstrahl schräg zur Glasplatte, aus der die Aufnahme 1 hergestellt werden soll, eingestrahlt wird. Eine Anwendung für eine solche Aufnahme ist die Möglichkeit, das von den lichtleitenden Fasern abgegebene Licht auf einen Raumbereich zu konzentrieren oder umgekehrt bei der Detektion von Licht den Erfassungsbereich einzuengen.

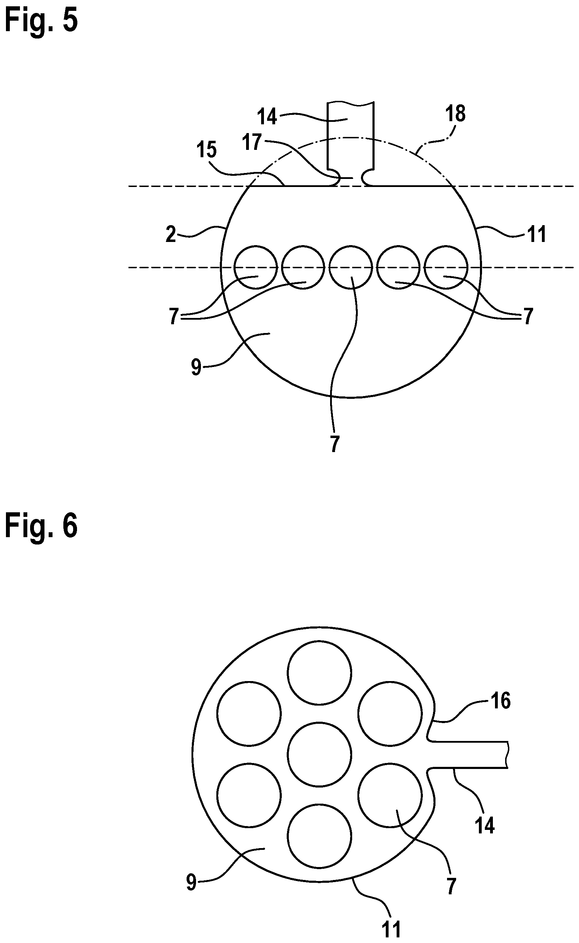

Fig. 5 zeigt in Aufsicht auf eine Stirnfläche 9 eine Aufnahme 1 mit verbundenem Steg 14, so wie diese nach dem oben beschriebenen Herstellungsprozess nach dem Ätzen und Ablösen eines Abschnitts einer Glasplatte erhalten wird. Der Steg 14 geht in die Mantelfläche 11 der Aufnahme 1 über, beziehungsweise ist mit der Aufnahme an deren Mantelfläche 11 verbunden. Gemäß einer Weiterbildung kann der Steg 14 eine Verjüngung 17 aufweisen. An der Verjüngung 17 wird das Auftrennen zum Ablösen der Aufnahme 1 erleichtert. Die Verjüngung 17 stellt also eine Sollbruchstelle dar. Wird der Steg 14 durchtrennt, vorzugsweise an einer Verjüngung 17, wie sie Fig. 5 zeigt, so wird eine Aufnahme 1 erhalten, welche an der Stelle des Steges 14 eine Trennfläche, als eine Bruchfläche ausgebildet, aufweist. Beim Abtrennen kann ein Teil des Steges 14 an der Aufnahme 1 verbleiben. In diesem Fall ist die Trennfläche dann auf einem sich in Längsrichtung der Aufnahme 1 verlaufenden Steg 14 angeordnet. Anders ausgedrückt befindet sich die Trennfläche, als Bruchfläche, dann auf einem Vorsprung. Unter Umständen kann dies unter anderem den Einbau in eine andere Komponente, wie etwa eine dazu vorgesehene Öffnung eines Steckverbinders behindern. Um dies zu vermeiden, kann die Mantelfläche 11 eine sich streifenförmig in Längsrichtung der Aufnahme 1 erstreckende Abflachung 15 oder Einsenkung aufweisen, wobei der Steg 14 wie dargestellt innerhalb der Abflachung 15 oder Einsenkung verläuft. Wird der Steg 14 dann durchtrennt, so wird entsprechend eine Aufnahme 1 erhalten, bei welcher die Trennfläche innerhalb der Abflachung oder Einsenkung verläuft. Generell kann der Steg 14 dann auch so durchtrennt werden, dass die Trennfläche innerhalb des Umkreises 18 um die Kontur der Querschnittfläche der Aufnahme 1, beziehungsweise entsprechend auch der Kontur einer der Stirnflächen 9, 10 liegt.

Fig. 6 zeigt eine Variante des Beispiels der Fig. 5. Während bei dem Beispiel der Fig. 5 am Ansatz des Steges 14 eine Abflachung 15 vorhanden ist, ist bei der Ausführungsform der Fig. 6 sogar eine Einsenkung 16 vorhanden. Mit anderen Worten ist der Steg 14 in einem Bereich mit der Aufnahme 1 verbunden, bei dem die Kontur der Mantelfläche 11 konkav gekrümmt ist. Wie auch bei der Ausführungsform mit der Abflachung 15 hat die Einsenkung 16 eine sich streifenförmig in Längsrichtung der Aufnahme 1 erstreckende Form.

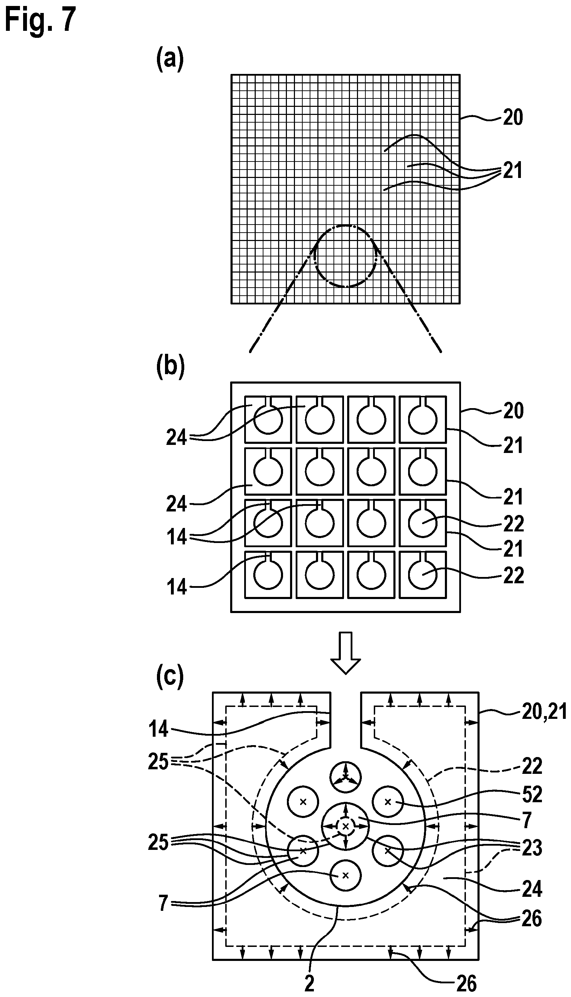

Fig. 7 zeigt Verfahrensschritte zur Herstellung eines Zwischenprodukts für eine Aufnahme 1.

Aus einem Wafer, welcher als Glasplatte 20 ausgebildet ist, sollen n x m WaferZellen 21 ausgearbeitet werden, wobei jede der Waferzellen 21 zumindest eine Aufnahme 1 enthält, die über den Steg 14 mit dem Wafer, beziehungsweise der Glasplatte 20 verbunden bleiben. Die Glasplatte 20 zeigt Teilbild (a) von Fig. 7. Zu Beginn des Verfahrens, vor der Strukturierung der Glasplatte sind die Waferzellen 21 noch nicht als Strukturen vorhanden. Für die Strukturierung werden zunächst mittels Laser parallel in den n x m Wafer-Zellen Rohlinge 22 der Aufnahmen 1 herausgearbeitet, welche noch mit ihren Stegen 14 mit der Glasplatte verbunden sind. Die Rohlinge 22 sind jeweils von einer Öffnung 24 umgeben. Eine Wafer-Zelle 21 wird dabei durch eine Öffnung 24 mit dem jeweils darin befindlichen Rohling 22 gebildet. Anders als dargestellt ist auch denkbar, dass in einer Öffnung 24 mehrere Rohlinge 22 angeordnet sind. Teilbild (b) der Fig. 7 zeigt dazu einen vergrößerten Ausschnitt des Teilbilds (a), in dem mehrere Wafer-Zellen 21 mit den jeweiligen Rohlingen 22 in den Öffnungen 24 zu erkennen sind. Nach dem Herausarbeiten der Rohlinge 22, beziehungsweise der Aufnahmen 1 bleiben diese mit der Glasplatte 20 über den Steg 14 verbunden, wobei die übrigen Teile der Glasplatte 20 einen Halteabschnitt 32 für die Aufnahmen 1 bilden.

Wie in Teilbild (c) gezeigt, werden die Rohlinge 22 der Aufnahmen 1 mit initialer Laserbearbeitung hinsichtlich der äußeren Kontur als auch der Kontur und Lage der Kanäle für den anschließenden Ätz-Prozeß vorbereitet. Dabei wird die gestrichelte Kontur mit einem Laser bearbeitet, wodurch nebeneinander Schädigungen eingefügt werden. Dazu wird der Laserstrahl eines Ultrakurzpulslasers über die Glasplatte 20 entlang eines vorgegebenen Pfades 23 bewegt, so dass entlang dieses Pfades 23 aufgereihte, nebeneinanderliegende lokale Schädigungen eingefügt werden. Die herauszuarbeitende Kontur ist also keine durchgehende Linie, sondern wird durch benachbarte Schädigungen, insbesondere in Form von Löchern oder Einschüssen gebildet. Dies stellt die Start-Kontur 25 für die Aufnahme 1, beziehungsweise den Rohling 22 in der Öffnung 24 dar. Der Abstand zur finalen Kontur 27 der Aufnahme 1 entspricht in etwa dem Radius der äußeren, hier kleineren Kanäle 7. Bei diesen wird nur ein Startloch geschossen, beziehungsweise nur eine einzelne Schädigung 52 eingefügt. Bei größeren Kanälen (hier z.B. der mittlere Kanal) kann ein um den Ätzweg, beziehungsweise den Ätzabtrag 26 verkleinerter Kreis als Pfad 23 abgefahren werden. Aus Gründen der Übersichtlichkeit ist nur die für die finale Kontur 27 relevante Ätzrichtung bzw. der Ätzabtrag 26 durch Pfeile visualisiert.

Typischerweise hat der Ätzprozess an sich eine isotrope Wirkung. Dies ist zum Beispiel der Fall, wenn das Ätzen, wie bevorzugt, nasschemisch erfolgt. Beispiele für geeignete Ätzmedien hierzu sind Flusssäure und Alkali-Laugen, wie etwa NaOH oder KOH. Die vorwiegend isotrope Ätzwirkung kann bei der initialen Laserbearbeitung und dem Einfügen der lokalen Schädigungen 52 entlang des Pfads 23 entsprechend berücksichtigt werden. Dazu können entsprechende Vorhaltstrecken berücksichtigt werden. Denkbar sind auch anisotrope Ätzprozesse, bei denen der Materialabtrag gerichtet erfolgt, und welche insbesondere in der Halbleitertechnology üblich sind. Ein Beispiel hierfür ist reaktives Ionenätzen (RIE), beziehungsweise Plasmaätzen mit Feldunterstützung. Hier erfolgt der Ätzprozess vorwiegend gerichtet senkrecht zur Wafer-Oberfläche. Mit einem solchen Verfahren und einer entsprechenden Maskierung, die als Ätzmaske ausgebildet ist, oder mittels eines photolithografischen Verfahrens als dünne Lackschicht in einem Zwischenschritt aufgebracht wird, können noch deutlich feinere Strukturen erzeugt werden.

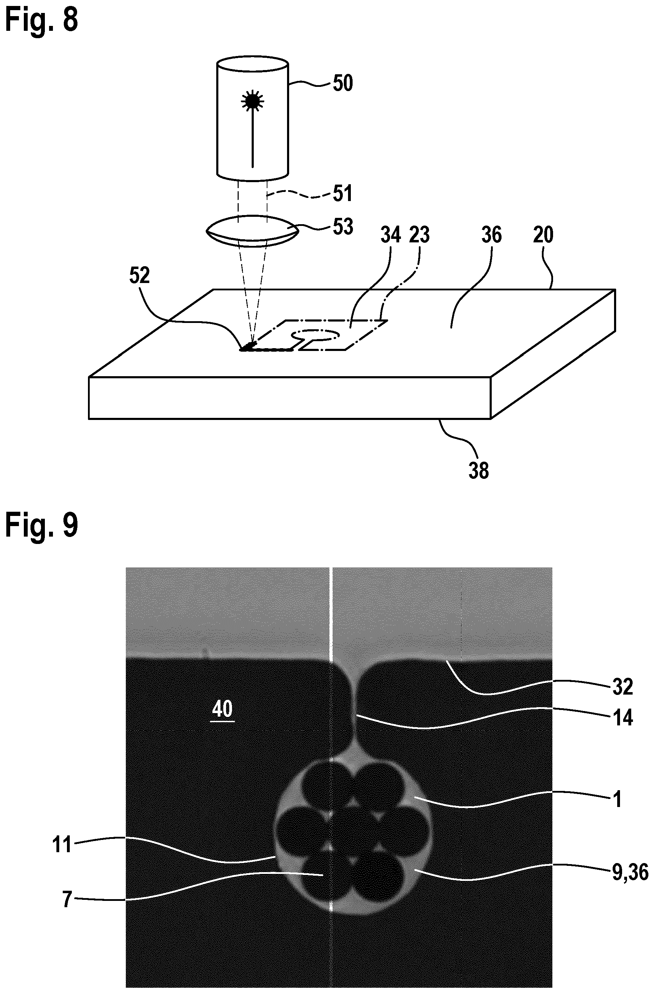

Fig. 8 zeigt zur Verdeutlichung des bevorzugten Verfahrens zur Herstellung der Aufnahmen 1 noch das Einfügen der lokalen Schädigungen 52 mittels eines Ultrakurzpulslasers. Für das Verfahren wird eine Glasplatte 20, beziehungsweise ein Glaswafer bereitgestellt. Die Glasplatte 20 wird dann mit einem Ultrakurzpulslaser 50 bestrahlt, wobei der Laserstrahl 51 des Ultrakurzpulslasers 50 im Glas fokussiert wird und dort lokale Schädigungen 52 hinterlässt. Im Beispiel der Fig. 8 ist zum Fokussieren eine einfache Linse 53 vorgesehen. Vorzugsweise werden lokale Schädigungen 53 eingefügt, die langgestreckt oder filamentförmig sind. Diese können sich insbesondere auch von einer Seitenfläche 36 der Glasplatte 20 bis zur gegenüberliegenden Seitenfläche 38 erstrecken. Dies erleichtert das Einwirken des Ätzmediums und beschleunigt daher den Auftrennprozess. Um eine solche langgestreckten Schädigung 52 zu erhalten, kann beispielsweise eine Linse 53 mit starker sphärischer Aberration verwendet werden. Durch die so hervorgerufene Kaustik wird der Fokus in Strahlrichtung auseinandergezogen. Nur eine von vielen weiteren Möglichkeiten ist die Verwendung eines Axicons. Mit einer solchen Kegelprismenlinse kann ein linienförmiger Fokus und ein Gauß-Bessel-Strahl im Glas geformt werden.

Wie dargestellt wird der Laserstrahl 51 des Ultrakurzpulslasers 50 über die Glasplatte 20 entlang eines vorgegebenen Pfades 23 bewegt, so dass entlang dieses Pfades 23 aufgereihte, nebeneinanderliegende lokale Schädigungen 52 eingefügt werden. Die Richtung, in welcher der Laserstrahl weitergeführt wird, ist in Fig. 8 durch einen Pfeil verdeutlicht. Wie dargestellt bildet der Pfad 23 die Kontur einer Aufnahme 1 nach, die über einen schmalen Steg mit der umgebenden Glasplatte 20 verbunden ist. Mit anderen Worten verläuft der Pfad 23 so, dass dieser die Kontur einer Aufnahme 1, die über einen Steg 14 mit einem Halteabschnitt 32 verbunden ist, enthält. Wird nach vollständigem Abfahren des Pfades und dem sukzessiven Einfügen der Schädigungen die Glasplatte 20 einem Ätzmedium ausgesetzt, so werden die lokalen Schädigungen 52 durch das Ätzmedium aufgeweitet und die Glasplatte 20 dadurch entlang des Pfades 23 aufgetrennt. Im dargestellten Beispiel wird auf diese Weise ein Abschnitt 34 abgelöst, welcher vom Pfad 23 eingeschlossen wird, so dass die Aufnahme 1 wie im Beispiel der Fig. 7, Teilbild (b) gezeigt, in einer durch das Ablösen dieses inneren Teils erzeugten Öffnung 24 befindet. Die Aufnahme kann dann zu einem späteren Zeitpunkt vom Halteabschnitt gelöst werden.

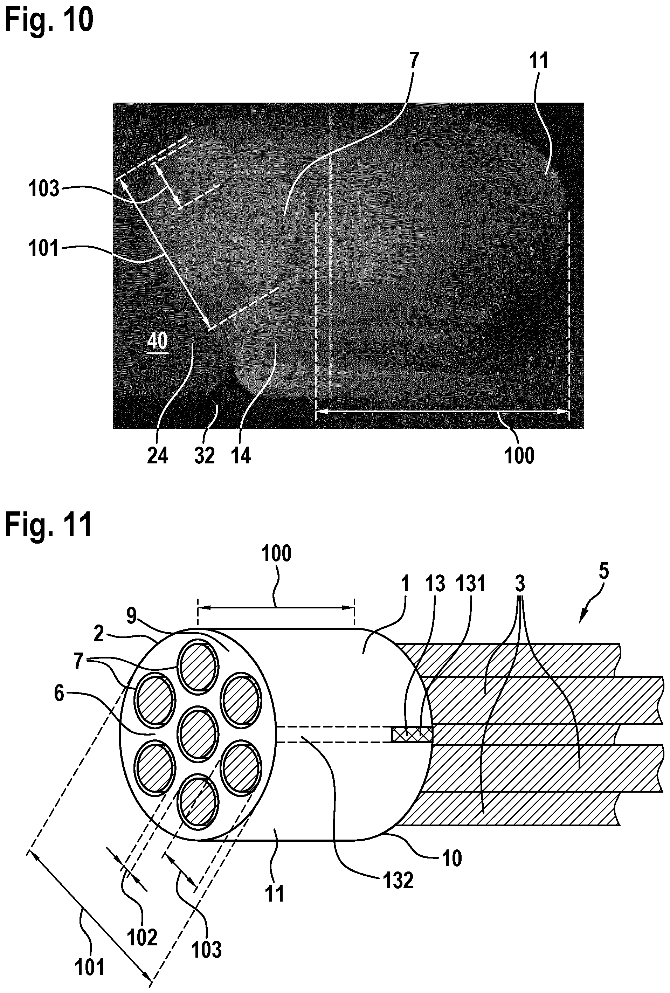

Mit dem Ätzschritt und dem Ablösen eines Abschnitts 34 wird ein Zwischenprodukt erhalten, welches eine Struktur hat, wie sie prinzipiell und beispielhaft in Fig. 7 dargestellt ist. Die Fig. 9 und Fig. 10 zeigen Mikroskopaufnahmen eines solchen Zwischenprodukts 40. Fig. 9 zeigt dabei das Zwischenprodukt 40 in Aufsicht auf eine seiner Seitenflächen 36, beziehungsweise auf eine Stirnfläche 9 der Aufnahme 1, die ja in der Seitenfläche 36 liegt, beziehungsweise einen Teil dieser Seitenfläche 36 bildet. Fig. 10 zeigt eine perspektivische Ansicht schräg auf die Aufnahme 1. Wie anhand der Bilder deutlich wird, kann der Steg 14 äußerst dünn geformt werden, so dass eine leichte Trennung der Aufnahme vom Halteabschnitt 32 möglich ist. Wie gesagt hat die Trennfläche vorzugsweise die Oberflächengestalt einer Bruchfläche. Es sind aber auch andere Trennverfahren denkbar. Beispielsweise könnte der Steg 14 durch Aufschmelzen aufgrund der lokalen Energieeinwirkung eines Laserstrahls durchtrennt werden. In diesem Fall hat die Trennfläche dann die Gestalt eines streifenförmigen Bereiches mit aufgeschmolzener Oberfläche. Die Querabmessung der Aufnahme 1 dieses Beispiels beträgt etwa 170 µm. Die Dicke des Zwischenerzeugnisses 40 und damit auch die Längsabmessung 100 der Aufnahme 1 beträgt 2mm. Die Querabmessung, beziehungsweise hier aufgrund des kreisrunden Querschnitts der Durchmesser der Kanäle 7 ist 55 µm. Damit können lichtleitende Fasern 3 mit einem Durchmesser von 50 µm in den Kanälen 7 aufgenommen werden.

Wie besonders anhand von Fig. 10 ersichtlich ist, stellt die Mantelfläche 11 der Aufnahme 1 eine geätzte Oberfläche mit einer erkennbaren Rauigkeit dar. Diese Oberfläche wird durch die Einwirkung des Ätzmediums auf die lokalen Schädigungen 52 hervorgerufen.

Eine Aufnahme 1 gemäß dieser Offenbarung kann neben der Verwendung als distale Ferrule für Endoskope auch allgemein als Positionierhilfe für Faseranordnungen in der Spektroskopie, sowie in der Nachrichtentechnik als Positionierhilfe von Einzel-Datenübertragungsfasern zu LED- bzw. Sensor-Arrays verwendet werden.

Die Aufnahme 1 und deren Herstellung ist weiterhin nicht auf bestimmte Glasarten beschränkt. Es ist aber sehr vorteilhaft, Gläser zu verwenden, die sich gut in Glasplatten mit einstellbarer Dicke formen lassen und die außerdem gut strukturierbar sind, um ein wie oben beschriebenes Zwischenprodukt herzustellen. Im Folgenden werden diesbezüglich geeignete und bevorzugte Gläser beschrieben.

Gemäß einer Ausführungsform wird die Aufnahme 1 aus einem Glas mit einer Zusammensetzung hergestellt, welche die folgenden Komponenten in Gew.-% umfasst:

| | |
|---|---|
| SiO₂ | 58 bis 65 |
| B₂O₃ | 6 bis 10,5 |
| Al₂O₃ | 14 bis 25 |
| MgO | 0 bis 3 |
| CaO | 0 bis 9 |
| BaO | 3 bis 8 |
| ZnO | 0 bis 2. |

Dabei gilt für die Zusammensetzung, dass die Summe des Gehalts von MgO, CaO und BaO im Bereich von 8 bis 18 Gew.-/ liegt. Das Glas zeichnet sich durch einen geringen oder verschwindenden Gehalt an Alkalioxiden aus. In einem Ausführungsbeispiel hierzu hat das Glas der Aufnahme 1 die folgende Zusammensetzung in Gewichtsprozent:

| | |
|---|---|
| SiO₂ | 61 |
| B₂O₃ | 10 |
| Al₂O₃ | 18 |
| MgO | 2,8 |
| CaO | 4,8 |
| BaO | 3,3 |

Mit dieser Zusammensetzung werden folgende Eigenschaften erhalten:

| | |
|---|---|
| α(20-300) | 3,2·10⁻⁶/K |
| T_{g} | 717°C |
| Dichte | 2,43 g/cm³. |

Nach einer weiteren Ausführungsform wird die Aufnahme aus einem Kalk-Natron-Glas hergestellt. In Weiterbildung dieser Ausführungsform weist das Glas eine Zusammensetzung auf, welche folgende Komponenten in Gew.-% enthält:

| | |
|---|---|
| SiO₂ Na₂O | 55 bis 75 0 bis 15 |
| K2O | 2 bis 14 |
| Al₂O₃ | 0 bis 15 |
| MgO | 0 bis 4 |
| CaO | 3 bis 12 |
| BaO | 0 bis 15 |
| ZnO | 0 bis 5 |
| TiO₂ | 0 bis 2 |

In einer weiteren Ausführungsform einer Aufnahme 1 mit einem Glaskörper 2 aus Kalk-Natron-Glas weist dieses Glas die folgenden Komponenten in Gew.-% auf:

| | |
|---|---|
| SiO₂ | 69 +/- 5 |
| Na₂O | 8 +/- 2 |
| K2O | 8 +/- 2 |
| CaO | 7 +/- 2 |
| BaO | 2 +/- 2 |
| ZnO | 4 +/- 2 |
| TiO₂ | 1 +/- 1 |
| SiO₂ | 80 +/- 5 |
| B₂O₃ | 13 +/- 5 |
| Al₂O₃ | 2,5 +/- 2 |
| Na₂O | 3,5 +/- 2 |
| K2O | 1 +/- 1 |

Mit dieser Zusammensetzung können folgende Eigenschaften des Glases erhalten werden:

| | |
|---|---|
| α(20-300) | 3,25·10⁻⁶/K |
| T_{g} | 525°C |
| Dichte | 2,2 g/cm³. |

Das Glas zeichnet sich unter anderem dadurch aus, dass es sich gut durch Floaten zu Glasplatten formen lässt.

Gemäß einer zweiten Ausführungsform eines Borosilikatglases weist das Glas der Aufnahme 1 eine Zusammensetzung mit den folgenden Komponenten in Gewichtsprozent auf:

| | |
|---|---|
| SiO₂ | 64,0 |
| B₂O₃ | 8,3 |
| Al₂O₃ | 4,0 |
| Na₂O | 6,5 |
| K₂O | 7,0 |
| ZnO | 5,5 |
| TiO₂ | 4,0 |
| Sb₂O₃ | 0,6 |
| Cl⁻ | 0,1 |

Mit dieser Zusammensetzung können folgende Eigenschaften des Glases erhalten werden:

| | |
|---|---|
| α(20-300) | 7,2·10⁻⁶/K |
| Tg | 557°C |
| Dichte | 2,5 g/cm³. |

Wie eingangs erwähnt sind auch rein Quarz basierte Materialien oder, insbesondere transparente, Glaskeramiken denkbar.

Fig. 11 zeigt eine Variante des in Fig. 1 dargestellten Beispiels. Bei den bisher beschriebenen Ausführungsformen, insbesondere wie in Fig. 1 gezeigt, erstreckt sich die Trennfläche 13 entlang der gesamten Länge der Aufnahme 1, also von einer Stirnfläche 9 bis zur anderen Stirnfläche 10. Demgemäß ist dann auch der Steg 14, mit welcher die Aufnahme 1 mit dem Halteabschnitt 32 der Glasplatte 20 verbunden ist, im Wesentlichen genau so lang, wie die Aufnahme 1. Dies kann gegebenenfalls jedoch das Ablösen der Aufnahme 1 von der Glasplatte 20 erschweren. Zudem kann die Aufnahme 1 sehr filigran ausgebildet sein, so dass deren Wandstärken zumindest bereichsweise ähnlich zu der Dicke des Stegs 14 sein kann. Daher kann es sein, dass beim Abtrennen durch die aufgewendete Kraft die Aufnahme 1 beschädigt wird. Um das Abtrennen weiter zu erleichtern, kann in einer Weiterbildung der Aufnahme 1 gemäß dieser Offenbarung daher vorgesehen sein, dass die Trennfläche 13 eine Bruchfläche 131 umfasst, welche sich nur entlang eines Teils der Länge der Aufnahme 1 erstreckt. Mit anderen Worten ist die Länge der Bruchfläche 131 gemessen in Längsrichtung der Aufnahme 1 kleiner als die Längsabmessung 100 der Aufnahme 1. Ein Beispiel dazu zeigt die in Fig. 11 gezeigte Variante der Ausführungsform von Fig. 1. Wie zu erkennen ist, ist die Bruchfläche 131 deutlich kürzer als die Aufnahme 1. Wie auch bei der Ausführungsform der Fig. 1 kann die Bruchfläche 131 aber eine langgestreckte Form aufweisen, die sich entlang der Längsrichtung der Aufnahme 1 erstreckt. Das Aspektverhältnis von Breite der Bruchfläche zu deren Länge beträgt dabei vorzugsweise mindestens 1:3, besonders bevorzugt mindestens 1:10. Allgemein beträgt die Länge der Bruchfläche 131 auch bei einer gegenüber der Länge der Aufnahme 1 verkürzten Länge außerdem in bevorzugter Ausgestaltung mindestens 100 µm. Ist also beispielsweise die Länge der Bruchfläche 131 100 µm und die Länge der Aufnahme 1 1 mm, so erstreckt sich die Bruchfläche 131 dementsprechend über 1/10 der Länge der Aufnahme 1. Die Trennfläche 13 kann weiterhin auch einen Trennflächenabschnitt 132 aufweisen, welcher keine Bruchfläche 131 ist. Beispielsweise kann eine solche Trennfläche 13 erhalten werden, indem zunächst ein Zwischenprodukt 40 in Form einer Glasplatte 20 hergestellt wird, wie es in Fig. 10 gezeigt ist und der Steg 14 anschließend teilweise, beispielsweise durch Schleifen oder allgemein durch ein abrasives Verfahren durchtrennt wird, so dass die Steglänge verkürzt wird. In diesem Fall ist der Trennflächenabschnitt 132 als vorzugsweise langgestreckte geschliffene Fläche ausgebildet.

In einer bevorzugten Ausführungsform ist aber außer einer oder gegebenenfalls auch mehreren Bruchflächen 131 kein weiterer Abschnitt der Trennfläche 13 vorhanden. In anderen Worten wird dabei also die Trennfläche 13 durch eine Bruchfläche 131 gebildet, deren Länge gemessen in Längsrichtung der Aufnahme 1 kürzer als die Längsabmessung 100 der Aufnahme ist.

Weiterhin ist es bevorzugt, dass im Falle einer solchen gegenüber der Länge der Aufnahme 1 verkürzten Bruchfläche 131 diese an eine der Stirnflächen 9, 10 der Aufnahme angrenzt, beziehungsweise von einem durch eine Stirnfläche 9, 10 definierten Ende der Aufnahme 1 ausgeht. Dies ist unter anderem günstig, um für das Abbrechen der Aufnahme einen längeren Hebel zu haben.

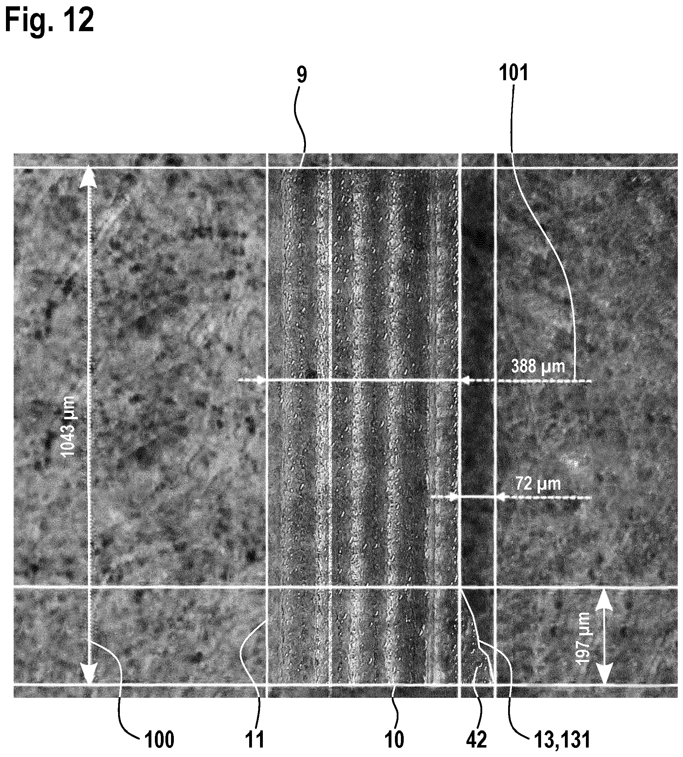

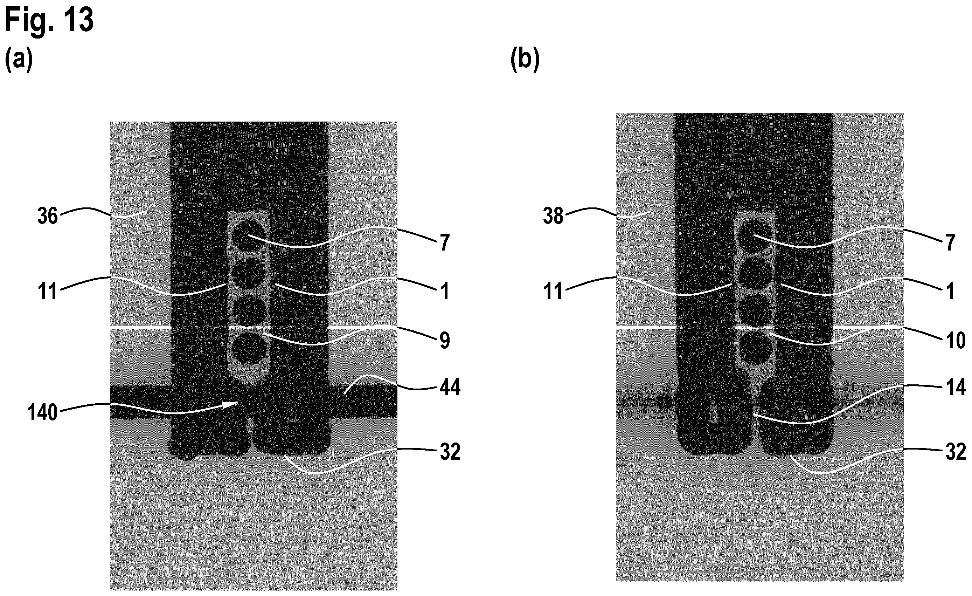

Fig. 12 zeigt ein lichtmikroskopisches Bild einer rechteckigen Aufnahme 1 beispielsweise nach beziehungsweise ähnlich Fig. 13. Die Aufnahme 1 hat eine Länge von 1043 µm und eine Querabmessung beziehungsweise Länge einer Kante von 388 µm. Durch das Abbrechen der Aufnahme 1 von einem Steg 14 kann, wie auch im dargestellten Beispiel zu erkennen, ein Vorsprung 42 auf der Aufnahme 1, beziehungsweise auf deren Mantelfläche 11 stehenbleiben, wobei die Bruchfläche 131 auf dem Vorsprung 42 verläuft. Insbesondere kann dieser Vorsprung 42 wie auch im Beispiel der Fig. 12 keilförmig sein. Die Kontur des Vorsprungs 42 ist in der Figur mit einer weißen Linie hervorgehoben. Ein solcher Vorsprung 42 ist besonders gut geeignet, um die Aufnahme 1 in einer geeigneten Halterung zu orientieren. Allgemein, ohne Beschränkung auf das spezielle dargestellte Beispiel ist in einer Weiterbildung vorgesehen, dass die Bruchfläche 131 zumindest teilweise auf einem Vorsprung 42 verläuft, wobei der Vorsprung 42 vorzugsweise auch keilförmig ausgebildet sein kann. Auch bei einer durchgehenden Bruchfläche 131, die sich über die gesamte Länge der Aufnahme 1 erstreckt, kann ein solcher Vorsprung vorhanden sein. Demgemäß ist in einer Weiterbildung vorgesehen, dass die Trennfläche 13 eine Bruchfläche 131 umfasst, wobei die Bruchfläche 131 zumindest teilweise auf einem Vorsprung 42 verläuft, wobei der Vorsprung 42 auch keilförmig ausgebildet sein kann. Dieses Merkmal des keilförmigen Vorsprungs 42 kann insbesondere dann vorliegen, wenn die Bruchfläche 42 kürzer als die Aufnahme 1 ist.

Fig. 13 zeigt lichtmikroskopische Bilder mit einem Zwischenprodukt 40 in Form einer Glasplatte 20 in Aufsicht auf die Seitenflächen 36, 38 der Glasplatte 20 und entsprechend auf die verschiedenen Stirnflächen 9 und 10 einer mit einem Steg 14 mit einem Halteabschnitt 32 verbundenen Aufnahme 1. Fig. 13 ist auch ein Beispiel für nicht runde Aufnahmen 1. Die dargestellte Aufnahme 1 hat die Gestalt eines abgeflachten Körpers, in welchem die Kanäle 7 in einer Linie liegend nebeneinander angeordnet sind. Als eine Querabmessung kann hier die Breite der Aufnahme 1 angesehen werden. Die beiden Bilder (a) und (b) zeigen die Glasplatte 20, jeweils aufgenommen in Aufsicht auf die gegenüberliegenden Seitenflächen 36, 38 der Glasplatte 20, so dass in Bild (a) die Stirnfläche 9 und in Bild (b) die Stirnfläche 10 der Aufnahme 1 zu sehen ist. In Bild (b) ist der Steg 14 als durchgehende Verbindung zu erkennen. Hingegen ist der Steg 14 auf der gegenüberliegenden Seite der Glasplatte 20 durch eine Ausnehmung 140 unterbrochen. Um eine solche Ausnehmung 140 zu erzeugen, kann bei der Strukturierung der Glasplatte 20 beispielsweise ein quer zum Steg 14 verlaufender Graben 44 eingefügt werden. Ohne Beschränkung auf das spezielle dargestellte Beispiel ist daher in einer Weiterbildung des Zwischenprodukts 40 vorgesehen, dass der Steg 14 eine gegenüber der Dicke der Glasplatte 20 zumindest abschnittsweise reduzierte Höhe aufweist, vorzugsweise, wobei im Steg 14 eine Ausnehmung 140 eingefügt ist, welche dessen Höhe gegenüber der Dicke der Glasplatte 20 reduziert.

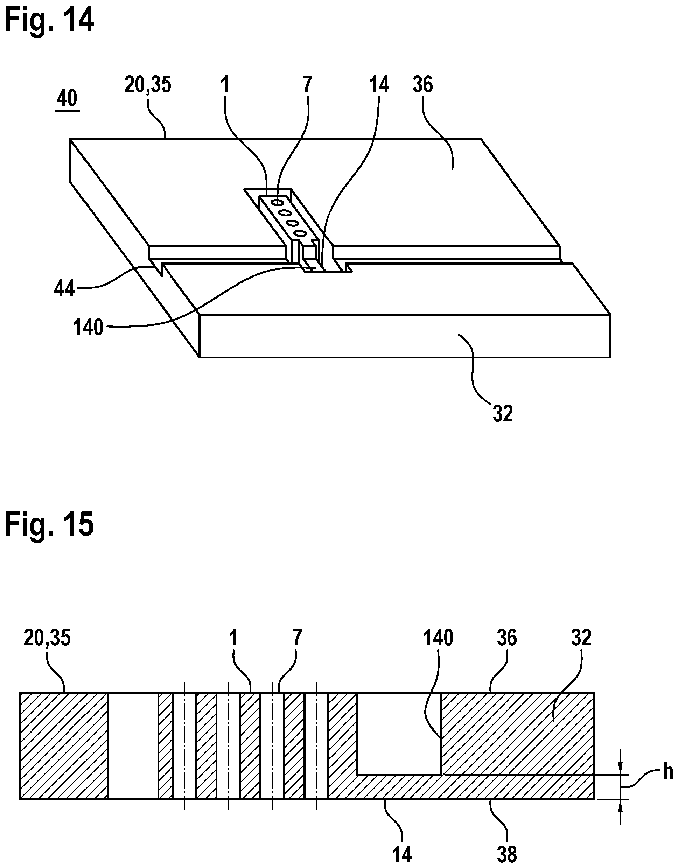

Fig. 14 zeigt das Zwischenprodukt 40 mit der Glasplatte 20 zur Verdeutlichung noch einmal als Skizze in perspektivischer Ansicht. Fig. 15 zeigt weiterhin die strukturierte Glasplatte 20 des Zwischenprodukts 40 in einer durch die Ausnehmung 140 schneidenden Schnittansicht. Anhand der Fig. 14 und 15 ist ersichtlich, dass die Höhe des Steges 14 durch die Ausnehmung 140 reduziert ist. Die Ausnehmung 14 kann die Steghöhe vorzugsweise deutlicher verkleinern, als in den rein schematischen Darstellung der Fig. 14 gezeigt. Bereits in der Darstellung der Fig. 15 ist die verbleibende Höhe h des Steges 14 kleiner als die halbe Dicke der Glasplatte 20. Vorzugsweise hat also die Ausnehmung 140 eine Tiefe von mindestens der halben Dicke der Glasplatte 20. Um die Stabilität nicht zu weit herabzusenken, ist die Tiefe der Ausnehmung 140 gemäß noch einer Weiterbildung höchstens 4/5, vorzugsweise höchstens 3/4 der Dicke der Glasplatte 20 für Glasdicken von bis zu 1 mm Dicke. Bei Glasdicken ab 1 mm bis 5 mm und mehr kann die Ausnehmung 140 auch eine Tiefe bis zu 9/10 der Glasdicke haben, beträgt aber mindestens 100 µm unabhängig von der Glasdicke. Wie anhand der Fig. 13 und Fig. 14 erläutert, kann die Glasplatte 20 allgemein einen Graben 44 aufweisen, welcher in eine der Seitenflächen 36, 38 der Glasplatte 20 eingefügt ist und den Steg 14 schneidet, so dass die Höhe des Steges 14 gegenüber der Dicke der Glasplatte 20 reduziert ist.

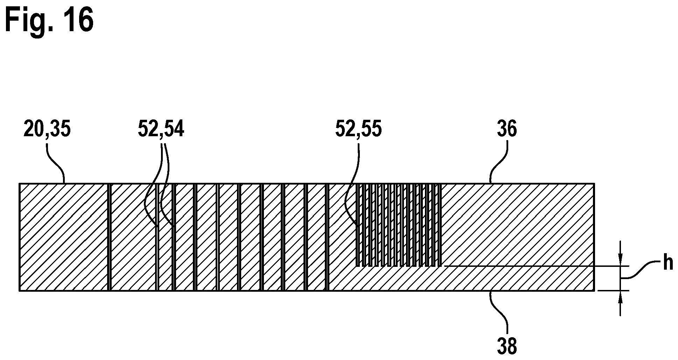

Ein Zwischenprodukt 40 und eine Aufnahme 1, wie sie beispielhaft anhand der Fig. 11 bis Fig. 15 beschrieben wurden und die sich dadurch auszeichnen, dass die Steghöhe gegenüber der Dicke der Glasplatte, beziehungsweise die Länge der Bruchfläche 131 gegenüber der Länge der Aufnahme 1 reduziert ist, kann allgemein mittels einer Weiterbildung des oben beschriebenen lasergestützten Ätzverfahrens hergestellt werden. Das Verfahren sieht, wie oben beschrieben vor, dass der Laserstrahl 51 eines Ultrakurzpulslasers 50 über die Glasplatte 20 entlang eines vorgegebenen Pfades 23 bewegt wird, so dass entlang dieses Pfades 23 aufgereihte, nebeneinanderliegende lokale Schädigungen 52 eingefügt werden, und wobei anschließend die Glasplatte 20 einem Ätzmedium ausgesetzt wird, so dass die lokalen Schädigungen 52 durch das Ätzmedium aufgeweitet werden und die Glasplatte 20 dadurch entlang des Pfades 23 aufgetrennt wird, wobei der Pfad 23 so verläuft, dass dieser die Kontur einer Aufnahme 1, die über einen Steg 14 mit einem Halteabschnitt 32 verbunden ist, enthält, und wobei durch das Ätzen und Auftrennen ein Abschnitt 34 der Glasplatte 20 abgelöst wird, so dass ein Glaselement 35 mit dem Halteabschnitt 32 und der mit diesem über den Steg 14 verbundenen Aufnahme 1 erhalten wird. Mit diesen Schritten wird das Zwischenprodukt 40 erhalten, wobei die Aufnahme 1 dann durch Auftrennen des Stegs 14 abgelöst werden kann. Eine Weiterbildung des Verfahrens sieht nun vor, mit dem Ultrakurzpulslaser lokale Schädigungen 54 einzufügen, welche eine gegenüber der Dicke der Glasplatte 20 reduzierte Länge aufweisen beziehungsweise vor einer der Seitenflächen 38, 36 enden. Fig. 16 zeigt dazu eine entsprechend mit dem Ultrakurzpulslaser bearbeitete Glasplatte 20 in einer Schnittansicht. Die Glasplatte 20 und der Schnitt sind dabei zur Verdeutlichung so gewählt, dass nach dem Ätzen ein Zwischenprodukt 40 entsprechend dem Beispiel der Fig. 15 erhalten würde. Die lokalen Schädigungen 52 sind in besonders bevorzugter Weise filamentförmig ausgebildet und bilden schmale Kanäle, die sich quer, vorzugsweise senkrecht zu den Seitenflächen 36, 38 in die Glasplatte 20 hinein erstrecken. Um die Kontur mit der Aufnahme 1 in der diese umgebende Öffnung in der Glasplatte, sowie die Kanäle 7 zur Aufnahme der Lichtleiter zu erzeugen, werden lokale Schädigungen in Form von die Glasplatte 20 von einer Seitenfläche 36 bis zur gegenüberliegenden Seitenfläche 38 durchquerenden Filamenten 54 eingefügt. Diese werden der vorgesehenen Kontur folgend nebeneinander erzeugt. In der Ansicht der Fig. 16 werden die jeweiligen Konturlinien geschnitten, so dass nur jeweils ein einzelnes Filament 54 sichtbar ist. Um die Ausnehmung 140 herzustellen, werden hinreichend dicht nebeneinander in einer oder mehreren Linien lokale Schädigungen 52 in Form von innerhalb der Glasplatte 20 endenden Filamenten 55 mit verkürzter Länge eingefügt. Diese gehen von einer der Seitenflächen 36, 38, im Beispiel der Seitenfläche 36 aus und enden im Inneren der Glasplatte 20 also hier vor der Seitenfläche 38. Beim Ätzen wird dadurch eine im Wesentlichen der Länge der Filamente 55 entsprechend tiefe Ausnehmung 140 erzeugt.

Ohne Beschränkung auf das dargestellte Beispiel ist allgemein eine Weiterbildung des Verfahrens vorgesehen, bei welcher mit dem Laserstrahl 51 lokale Schädigungen 52 entlang zumindest eines vorgegebenen Pfades eingefügt werden, welche die Form von Filamenten 54 haben, welche die Glasplatte 20 vollständig durchqueren, und wobei zusätzlich nebeneinanderliegend lokale Schädigungen 52 in Form von innerhalb der Glasplatte 20 endenden Filamenten 55 eingefügt werden, wobei durch das nachfolgende Ätzen im Bereich der innerhalb der Glasplatte 20 endenden Filamente 55 eine Ausnehmung 140 erzeugt wird, welche die Höhe des die Aufnahme 1 mit dem Halteabschnitt 32 verbindenden Steges gegenüber der Dicke der Glasplatte 20 reduziert.

Das Verfahren zur Erzeugung von Kavitäten oder Ausnehmungen ist auch in der DE 102018 110 211 A1 beschrieben.

Es ist dem Fachmann ersichtlich, dass die Ausgestaltungen der Aufnahme 1, deren Herstellung und des Zwischenprodukts 40 nicht auf die speziellen in den Figuren dargestellten Beispiele beschränkt sind. So können die verschiedenen Ausgestaltungen auch miteinander kombiniert werden. Das Zwischenprodukt 40 ist unter anderem nicht auf eine Form mit in einzelnen Öffnungen 24 eines Halteabschnitts 32 mit Stegen 14 gehaltenen Aufnahmen 1 beschränkt. Hier sind auch viele andere Konfigurationen, wie etwa ein beispielsweise streifenförmiger Halteabschnitt 32 denkbar, bei welchem die Stege 14 mit den Aufnahmen 1 frei nach außen ragen. Eine solche Ausführungsform kann beispielsweise günstig sein, um besonders leicht die Aufnahmen 1 greifen, abbrechen und entnehmen zu können.

### Bezugszeichenliste

| | |
|---|---|
| 1 | Aufnahme |
| 2 | Glasteil |
| 3 | lichtleitende Faser |
| 4 | Kamera |
| 5 | Lichtleiter |
| 6 | Wandung zwischen benachbarten Kanälen 7 |
| 7 | Kanal in 1 |
| 8 | zentraler Kanal |
| 9, 10 | Stirnfläche von 1 |
| 11 | Mantelfläche |
| 13 | Trennfläche |
| 14 | Steg |
| 15 | Abflachung |
| 16 | Einsenkung |
| 17 | Verjüngung |
| 18 | Umkreis |
| 20 | Glasplatte |
| 21 | Zelle |
| 22 | Rohling für 1 |
| 23 | Pfad, Kontur von initialer Laserbearbeitung |
| 24 | Öffnung |
| 25 | Start-Kontur |
| 26 | Ätzweg, Ätzabtrag |
| 27 | finale Kontur |
| 32 | Halteabschnitt |
| 50 | Ultrakurzpulslaser |
| 34 | Abschnitt von 20 |
| 35 | Glaselement |
| 36, 38 | Seitenflächen von 20, 40 |
| 40 | Zwischenprodukt |
| 42 | Vorsprung |
| 44 | Graben |
| 51 | Laserstrahl |
| 52 | lokale Schädigung |
| 53 | Linse |
| 54 | die Glasplatte 20 durchquerendes Filament |
| 55 | innerhalb der Glasplatte 20 endendes Filament |
| 70 | Öffnung von 7 |
| 100 | Längsabmessung von 1 |
| 101 | Querabmessung von 1 |
| 102 | Wandstärke von 6 |
| 103 | Querabmessung / Durchmesser von 7 |
| 131 | Bruchfläche |
| 132 | Trennflächenabschnitt ohne Bruchfläche |
| 140 | Ausnehmung in 14 |
| 400 | Kamerasensor |

## Patentansprüche

1. Aufnahme (1) für eine Mehrzahl von lichtleitenden Fasern (3) eines Lichtleiters (5), mit zwei gegenüberliegenden Stirnflächen (9, 10) wobei die Aufnahme (1) aus einem Glas gefertigt ist und mehrere geradlinige Kanäle (7) aufweist, wobei die Kanäle (7) sich in Richtung von einer Stirnfläche (9) der Aufnahme (1) hin zur anderen Stirnfläche (10) erstrecken, und wobei die Kanäle (7) jeweils an zumindest einem der Enden (9, 10) geöffnet sind, so dass eine lichtleitende Faser (3) in den Kanal (7) einführbar ist, wobei die Kanäle (7) eine Länge aufweisen, die größer als deren Querabmessung ist, und die Aufnahme (1) eine Länge, gegeben durch den Abstand der Stirnflächen (9, 10) aufweist, die größer ist als deren größte Querabmessung ist, **dadurch gekennzeichnet, dass** auf der Mantelfläche (11) der Aufnahme (1) eine Trennfläche (13), die mindestens teil- oder abschnittsweise in Gestalt einer Bruchfläche (131) ausgebildet ist, verläuft.

2. Aufnahme (1) gemäß dem vorstehenden Anspruch, **dadurch gekennzeichnet, dass** die Trennfläche (13) langgestreckt ist und in Längsrichtung der Aufnahme (1) verläuft.

3. Aufnahme (1) gemäß einem der vorstehenden Ansprüche, **dadurch gekennzeichnet, dass** die Trennfläche (13) eine Bruchfläche (131) umfasst, welche sich nur entlang eines Teils der Länge der Aufnahme (1) erstreckt.

4. Aufnahme (1) gemäß dem vorstehenden Anspruch, **dadurch gekennzeichnet, dass** die Bruchfläche (131) an eine der Stirnflächen (9, 10) der Aufnahme (1) angrenzt.

5. Aufnahme (1) gemäß einem der vorstehenden Ansprüche, **dadurch gekennzeichnet, dass** die Trennfläche (13) eine Bruchfläche (131) umfasst, wobei die Bruchfläche (131) zumindest teilweise auf einem Vorsprung (42) verläuft.

6. Aufnahme (1) gemäß Anspruch 1 oder 2, **gekennzeichnet durch** geätzte Oberflächen der Aufnahme (1).

7. Aufnahme (1) gemäß einem der vorstehenden Ansprüche, **gekennzeichnet durch** zumindest eines der folgenden Merkmale:
- die Anzahl der Kanäle (7) liegt im Bereich von 2 bis 40, vorzugsweise im Bereich von 2 bis 20,
- zumindest einer der Kanäle (7) ist als Sackloch ausgebildet,
- zumindest einer der Kanäle (7) verläuft schräg zur Längsrichtung der Aufnahme 1.

8. Aufnahme (1) gemäß einem der vorstehenden Ansprüche, **dadurch gekennzeichnet, dass** die Trennfläche (13) auf einem sich in Längsrichtung der Aufnahme (1) verlaufenden Steg (14) angeordnet ist.

9. Aufnahme (1) gemäß einem der vorstehenden Ansprüche, **gekennzeichnet durch** zumindest eines der folgenden Merkmale:
- die Mantelfläche (11) weist eine sich streifenförmig in Längsrichtung erstreckende Abflachung (15) oder Einsenkung (16) auf, wobei die Trennfläche (13) innerhalb der Abflachung (15) oder Einsenkung (16) verläuft,
- die Trennfläche (13) liegt innerhalb des Umkreises (18) um die Kontur einer der Stirnflächen (9, 10) liegt.

10. Aufnahme (1) gemäß einem der vorstehenden Ansprüche, **gekennzeichnet durch** eine der folgenden Anordnungen von Kanälen (7), betrachtet in Aufsicht auf eine der Stirnflächen (9, 10):
- die Kanäle (7) nehmen eine hexagonale Anordnung ein,
- die Kanäle (7) sind ringförmig um einen zentralen Kanal (8) herum verteilt,
- die Kanäle (7) verlaufen parallel zueinander,
- zuzüglich zu zumindest einem Kanal (7) zur Aufnahme einer lichtleitenden Faser (3) ist ein Kanal (7,8) zur Aufnahme einer Kamera (4) oder eines optischen Sensors, insbesondere eines Kamerasensors (400) vorgesehen.

11. Aufnahme (1) gemäß einem der vorstehenden Ansprüche, **dadurch gekennzeichnet, dass** das Glas der Aufnahme (1) zumindest in einem Teilbereich des Spektralbereichs von 1000 nm bis 350 nm, vorzugsweise zumindest in einem Teilbereich des Spektralbereichs von 400 nm bis 750 nm opak ist.

12. Verfahren zur Herstellung einer Aufnahme (1) gemäß einem der vorstehenden Ansprüche, mit den Schritten:
- Bereitstellen einer Glasplatte (20),
- Bestrahlen der Glasplatte (20) mit einem Ultrakurzpulslaser (50), wobei der Laserstrahl (51) des Ultrakurzpulslasers (50) im Glas fokussiert wird und dort lokale Schädigungen (52) hinterlässt, wobei
- der Laserstrahl (51) des Ultrakurzpulslasers (50) über die Glasplatte (20) entlang eines vorgegebenen Pfades (23) bewegt wird, so dass entlang dieses Pfades (23) aufgereihte, nebeneinanderliegende lokale Schädigungen (52) eingefügt werden, und wobei anschließend
- die Glasplatte (20) einem Ätzmedium ausgesetzt wird, so dass
- die lokalen Schädigungen (52) durch das Ätzmedium aufgeweitet wird und die Glasplatte (20) dadurch entlang des Pfades (23) aufgetrennt wird, wobei der Pfad (23) so verläuft, dass dieser die Kontur einer Aufnahme (1), die über einen Steg (14) mit einem Halteabschnitt (32) verbunden ist, enthält, und wobei durch das Ätzen und Auftrennen ein Abschnitt (34) der Glasplatte (20) abgelöst wird, so dass ein Glaselement (35) mit dem Halteabschnitt (32) und der mit diesem über den Steg (14) verbundenen Aufnahme (1) erhalten wird, und wobei
- die Aufnahme (1) durch Auftrennen des Stegs (14) vom Halteabschnitt (32) gelöst wird.

13. Verfahren gemäß dem vorstehenden Anspruch, bei welchem mit dem Laserstrahl (51) lokale Schädigungen (52) entlang zumindest eines vorgegebenen Pfades (23) eingefügt werden, welche die Form von Filamenten (54) haben, welche die Glasplatte (20) durchqueren, und wobei zusätzlich nebeneinanderliegend lokale Schädigungen (52) in Form von innerhalb der Glasplatte (20) endenden Filamenten (55) eingefügt werden, wobei durch das nachfolgende Ätzen im Bereich der innerhalb der Glasplatte (20) endenden Filamente (55) eine Ausnehmung (140) erzeugt wird, welche die Höhe des die Aufnahme (1) mit dem Halteabschnitt (32) verbindenden Steges (14) gegenüber der Dicke der Glasplatte (20) reduziert.

14. Zwischenprodukt (40) zur Herstellung einer Aufnahme (1) gemäß einem der vorstehenden Ansprüche, wobei das Zwischenprodukt (40) die Form einer Glasplatte (20) mit gegenüberliegenden parallelen Seitenflächen (36, 38) hat, wobei sich das Zwischenprodukts (40) in einen Halteabschnitt (32) und eine über einen Steg (14) mit dem Halteabschnitt (32) verbundene Aufnahme (1) gemäß einem der vorstehenden Ansprüche untergliedert, und wobei die Stirnflächen (9, 10) der Aufnahme (1) durch Abschnitte der Seitenflächen (36, 38) gebildet werden und die Kanäle (7) in der Aufnahme (1) sich quer zu den Seitenflächen (36, 38) des Zwischenprodukts (40) erstrecken.

15. Zwischenprodukt (40) gemäß dem vorstehenden Anspruch, **dadurch gekennzeichnet, dass** der Steg (14) eine gegenüber der Dicke der Glasplatte (20) zumindest abschnittsweise reduzierte Höhe aufweist.

16. Zwischenprodukt (40) gemäß dem vorstehenden Anspruch, **dadurch gekennzeichnet, dass** die Glasplatte (20) einen Graben (44) aufweist, welcher in eine der Seitenflächen (36, 38) der Glasplatte (20) eingefügt ist und den Steg (14) schneidet, so dass die Höhe des Steges (14) gegenüber der Dicke der Glasplatte (20) reduziert ist.

## Claims

1. Receptacle (1) for a plurality of light-guiding fibres (3) of a light guide (5), having two opposite end faces (9, 10), wherein the receptacle (1) is manufactured from a glass and has a plurality of rectilinear channels (7), wherein the channels (7) extend in the direction from one end face (9) of the receptacle (1) to the other end face (10), and wherein the channels (7) are each open at at least one of the ends (9, 10), thus enabling a light-guiding fibre (3) to be introduced into the channel (7), wherein the channels (7) have a length which is greater than the transverse dimension thereof, and the receptacle (1) has a length, given by the distance between the end faces (9, 10), which is greater than the largest transverse dimension thereof, **characterized in that** a separation surface (13), which is at least partially or in some section or sections in the form of a fracture surface (131) runs on the lateral surface (11) of the receptacle (1).

2. Receptacle (1) according to the preceding claim, **characterized in that** the separation surface (13) is elongate and runs in the longitudinal direction of the receptacle (1).

3. Receptacle (1) according to either of the preceding claims, **characterized in that** the separation surface (13) comprises a fracture surface (131) which extends along only part of the length of the receptacle (1).

4. Receptacle (1) according to the preceding claim, **characterized in that** the fracture surface (131) is adjacent to one of the end faces (9, 10) of the receptacle (1).

5. Receptacle (1) according to any one of the preceding claims, **characterized in that** the separation surface (13) comprises a fracture surface (131), wherein the fracture surface (131) runs at least partially on a projection (42) .

6. Receptacle (1) according to Claim 1 or 2, **characterized by** etched surfaces of the receptacle (1).

7. Receptacle (1) according to any one of the preceding claims, **characterized by** at least one of the following features:
- the number of channels (7) is in a range of from 2 to 40, preferably in a range of from 2 to 20,
- at least one of the channels (7) is designed as a blind hole,
- at least one of the channels (7) runs obliquely to the longitudinal direction of the receptacle (1).

8. Receptacle (1) according to any one of the preceding claims, **characterized in that** the separation surface (13) is arranged on a web (14) running in the longitudinal direction of the receptacle (1).

9. Receptacle (1) according to any one of the preceding claims, **characterized by** at least one of the following features:
- the lateral surface (11) has a flattened portion (15) or depression (16) extending in the form of a strip in the longitudinal direction, wherein the separation surface (13) runs within the flattened portion (15) or depression (16),
- the separation surface (13) lies within the perimeter (18) around the contour of one of the end faces (9, 10).

10. Receptacle (1) according to any one of the preceding claims, **characterized by** one of the following arrangements of channels (7), when considered in a plan view of one of the end faces (9, 10):
- the channels (7) assume a hexagonal arrangement,
- the channels (7) are distributed annularly around a central channel (8),
- the channels (7) run parallel to one another,
- in addition to at least one channel (7) for receiving a light-guiding fibre (3), a channel (7, 8) is provided for receiving a camera (4) or an optical sensor, in particular a camera sensor (400).

11. Receptacle (1) according to any one of the preceding claims, **characterized in that** the glass of the receptacle (1) is opaque at least in a partial range of the spectral range from 1000 nm to 350 nm, preferably at least in a partial range of the spectral range from 400 nm to 750 nm.

12. Method for producing a receptacle (1) according to any one of the preceding claims, comprising the following steps:
- providing a glass plate (20),
- irradiating the glass plate (20) with an ultra-short-pulse laser (50), wherein the laser beam (51) of the ultra-short-pulse laser (50) is focused in the glass and leaves local areas of damage (52) there, wherein
- the laser beam (51) of the ultra-short-pulse laser (50) is moved over the glass plate (20) along a predetermined path (23), with the result that mutually adjacent local areas of damage (52) lined up along this path (23) are introduced, and wherein subsequently
- the glass plate (20) is exposed to an etching medium, with the result that
- the local areas of damage (52) are expanded by the etching medium, and the glass plate (20) is thereby divided along the path (23), wherein the path (23) runs in such a way that it contains the contour of a receptacle (1), which is connected to a holding section (32) via a web (14), and wherein a section (34) of the glass plate (20) is detached by the etching and division, with the result that a glass element (35) with the holding section (32) and the receptacle (1) connected to the latter via the web (14) is obtained, and wherein
- the receptacle (1) is released from the holding section (32) by dividing the web (14).

13. Method according to the preceding claim, in which local areas of damage (52) are introduced by means of the laser beam (51) along at least one predetermined path (23), the said areas of damage having the form of filaments (54) which pass through the glass plate (20), and in which, in addition, local areas of damage (52) in the form of filaments (55) ending within the glass plate (20) are introduced next to one another, wherein a recess (140) is produced by the subsequent etching in the region of the filaments (55) ending within the glass plate (20), which recess reduces the height of the web (14) connecting the receptacle (1) to the holding section (32) relative to the thickness of the glass plate (20).

14. Intermediate product (40) for producing a receptacle (1) according to any one of the preceding claims, wherein the intermediate product (40) is in the form of a glass plate (20) having opposite parallel side faces (36, 38), wherein the intermediate product (40) is subdivided into a holding section (32) and a receptacle (1) according to any one of the preceding claims, which is connected to the holding section (32) via a web (14), and wherein the end faces (9, 10) of the receptacle (1) are formed by sections of the side faces (36, 38), and the channels (7) in the receptacle (1) extend transversely to the side faces (36, 38) of the intermediate product (40).

15. Intermediate product (40) according to the preceding claim, **characterized in that** the web (14) has a height which is reduced at least in some section or sections relative to the thickness of the glass plate (20).

16. Intermediate product (40) according to the preceding claim, **characterized in that** the glass plate (20) has a trench (44), which is introduced into one of the side faces (36, 38) of the glass plate (20) and intersects the web (14), with the result that the height of the web (14) is reduced relative to the thickness of the glass plate (20).

## Revendications

1. Logement (1) pour une pluralité de fibres optiques (3) d'un guide d'ondes optiques (5), présentant deux faces frontales (9, 10) opposées, le logement (1) étant réalisé en verre et comportant plusieurs canaux (7) rectilignes, les canaux (7) s'étendant dans la direction allant d'une face frontale (9) du logement (1) à l'autre face frontale (10), et les canaux (7) étant respectivement ouverts à au moins l'une des extrémités (9, 10), de sorte qu'une fibre optique (3) peut être introduite dans le canal (7), les canaux (7) ayant une longueur qui est supérieure à leur dimension transversale, et le logement (1) ayant une longueur, donnée par la distance entre les faces frontales (9, 10), qui est supérieure à sa plus grande dimension transversale, **caractérisé en ce qu'**une surface de séparation (13), qui est réalisée au moins en partie ou par sections sous la forme d'une surface de rupture (131), s'étend sur la surface extérieure (11) du logement (1).

2. Logement (1) selon la revendication précédente, **caractérisé en ce que** la surface de séparation (13) est allongée et s'étend dans la direction longitudinale du logement (1).

3. Logement (1) selon l'une des revendications précédentes, **caractérisé en ce que** la surface de séparation (13) comprend une surface de rupture (131) qui s'étend uniquement le long d'une partie de la longueur du logement (1).

4. Logement (1) selon la revendication précédente, **caractérisé en ce que** la surface de rupture (131) est adjacente à l'une des faces frontales (9, 10) du logement (1).

5. Logement (1) selon l'une des revendications précédentes, **caractérisé en ce que** la surface de séparation (13) comprend une surface de rupture (131), la surface de rupture (131) s'étendant au moins en partie sur une saillie (42).

6. Logement (1) selon la revendication 1 ou 2, **caractérisé par** des surfaces gravées du logement (1).

7. Logement (1) selon l'une des revendications précédentes, **caractérisée par** au moins l'une des caractéristiques suivantes :
- le nombre des canaux (7) se situe dans la plage de 2 à 40, de préférence dans la plage de 2 à 20,
- au moins l'un des canaux (7) est réalisé sous la forme d'un trou borgne,
- au moins l'un des canaux (7) s'étend de manière oblique par rapport à la direction longitudinale du logement (1).

8. Logement (1) selon l'une des revendications précédentes, **caractérisé en ce que** la surface de séparation (13) est agencée sur une barre (14) s'étendant dans la direction longitudinale du logement (1).

9. Logement (1) selon l'une des revendications précédentes, **caractérisée par** au moins l'une des caractéristiques suivantes :
- la surface extérieure (11) présente un aplatissement (15) ou un enfoncement (16) s'étendant en forme de bande dans la direction longitudinale, la surface de séparation (13) s'étendant à l'intérieur de l'aplatissement (15) ou de l'enfoncement (16),
- la surface de séparation (13) se situe à l'intérieur du périmètre (18) autour du contour de l'une des faces frontales (9, 10).

10. Logement (1) selon l'une des revendications précédentes, **caractérisé par** l'un des agencements suivants des canaux (7), considéré en vue de dessus sur l'une des faces frontales (9, 10) :
- les canaux (7) présentent un agencement hexagonal,
- les canaux (7) sont répartis de manière annulaire autour d'un canal central (8),
- les canaux (7) s'étendent parallèlement les uns aux autres,
- en plus d'au moins un canal (7) destiné au logement d'une fibre optique (3), un canal (7, 8) est prévu pour le logement d'une caméra (4) ou d'un capteur optique, en particulier d'un capteur à caméra (400).

11. Logement (1) selon l'une des revendications précédentes, **caractérisé en ce que** le verre du logement (1) est opaque au moins dans une partie de la plage spectrale de 1000 nm à 350 nm, de préférence au moins dans une partie de la plage spectrale de 400 nm à 750 nm.

12. Procédé pour la fabrication d'un logement (1) selon l'une des revendications précédentes, comprenant les étapes suivantes :
- la mise à disposition d'une lame de verre (20),
- l'irradiation de la lame de verre (20) avec un laser à impulsions ultracourtes (50), le faisceau laser (51) du laser à impulsions ultracourtes (50) étant focalisé dans le verre et y laissant des endommagements locaux (52),
- le faisceau laser (51) du laser à impulsions ultracourtes (50) étant déplacé au-dessus de la lame de verre (20) le long d'un trajet prédéfini (23), de sorte que des endommagements locaux (52) alignés et adjacents les uns aux autres sont introduits le long de ce trajet (23), et suite à quoi
- la lame de verre (20) étant exposée à un milieu de gravure, de sorte que
- les endommagements locaux (52) sont dilatés par le milieu de gravure et que la lame de verre (20) est ainsi séparée le long du trajet (23), le trajet (23) s'étendant de telle sorte qu'il contient le contour d'un logement (1) qui est relié à une section de maintien (32) par l'intermédiaire d'une barre (14), et une section (34) de la plaque de verre (20) étant détachée du fait de la gravure et de la séparation, de sorte qu'un élément en verre (35) comprenant la section de maintien (32) et le logement (1) qui lui est relié par l'intermédiaire de la barre (14) est obtenu, et
- le logement (1) étant détaché de la section de maintien (32) par séparation de la barre (14).

13. Procédé selon la revendication précédente, dans lequel des endommagements locaux (52) sont introduits par le faisceau laser (51) le long d'au moins un trajet prédéfini (23), lesquels présentent la forme de filaments (54) qui traversent la lame de verre (20), et des endommagements locaux (52) adjacents les uns aux autres sous la forme de filaments (55) qui se terminent à l'intérieur de la lame de verre (20) étant également introduits, un évidement (140) étant généré, du fait de la gravure se produisant ensuite, dans la zone des filaments (55) qui se terminent à l'intérieur de la lame de verre (20), lequel réduit la hauteur de la barre (14) reliant le logement (1) à la section de maintien (32) par rapport à l'épaisseur de la lame de verre (20).

14. Produit intermédiaire (40) pour la fabrication d'un logement (1) selon l'une des revendications précédentes, le produit intermédiaire (40) présentant la forme d'une lame de verre (20) ayant des faces latérales parallèles opposées (36, 38), le produit intermédiaire (40) étant subdivisé en une section de maintien (32) et un logement (1) relié à la section de maintien (32) par l'intermédiaire d'une barre (14) selon l'une des revendications précédentes, et les faces frontales (9, 10) du logement (1) étant formées par des sections des faces latérales (36, 38) et les canaux (7) s'étendant dans le logement (1) transversalement aux faces latérales (36, 38) du produit intermédiaire (40).

15. Produit intermédiaire (40) selon la revendication précédente, **caractérisé en ce que** la barre (14) présente une hauteur réduite au moins par sections par rapport à l'épaisseur de la lame de verre (20).

16. Produit intermédiaire (40) selon la revendication précédente, **caractérisé en ce que** la lame de verre (20) comporte une tranchée (44), qui est introduite dans l'une des faces latérales (36, 38) de la lame de verre (20) et coupe la barre (14), de sorte que la hauteur de la barre (14) est réduite par rapport à l'épaisseur de la lame de verre (20).
